# EUROPEAN PATENT SPECIFICATION

(11) **EP 2 665 246 B1**
(45) Date of publication and mention of the grant of the patent: **14.10.2020**
(21) Application number: 12734389.5
(22) Date of filing: 06.01.2012
(51) Int. Cl.: H04W 8/22, H04W 12/06, H04W 12/08, H04L 12/28, H04W 8/20, H04W 28/18, H04W 74/00

(54) **WIRELESS TERMINAL DEVICE, INFORMATION PROCESSING DEVICE, COMMUNICATION SYSTEM AND METHOD OF CONTROLLING WIRELESS TERMINAL DEVICE**
DRAHTLOSES ENDGERÄT, INFORMATIONSVERARBEITUNGSVORRICHTUNG, KOMMUNIKATIONSSYSTEM UND VERFAHREN ZUM STEUERN DES DRAHTLOSEN ENDGERÄTES
DISPOSITIF TERMINAL SANS FIL, DISPOSITIF DE TRAITEMENT D'INFORMATIONS, SYSTÈME DE COMMUNICATION ET PROCÉDÉ DE COMMANDE DE DISPOSITIF TERMINAL SANS FIL

(30) Priority: 14.01.2011 JP 2011006177
(43) Date of publication of application: 20.11.2013
(73) Proprietor: Sony Corporation, Tokyo 108-0075 (JP)
(72) Inventor: ITOH, Katsutoshi, Tokyo 108-0075 (JP); NAITO, Masahiko, Tokyo 108-0075 (JP)
(74) Representative: D Young & Co LLP
(86) International application number: PCT/JP2012/050168
(87) International publication number: WO 2012/096226

(56) References cited:
- WO-A1-03/041445
- JP-A- 2001 285 916
- JP-A- 2007 311 871
- JP-A- 2007 513 534
- JP-A- 2008 541 635
- JP-A- 2010 532 107
- US-A1- 2005 085 229
- US-A1- 2007 213 039
- US-A1- 2008 261 561

## Description

### Technical Field

The present disclosure relates to a wireless terminal apparatus, and in particular, relates to a wireless terminal apparatus connected to a network, an information processing apparatus, a communication system including these apparatuses, and a control method of a wireless terminal apparatus.

### Background Art

Wireless terminal apparatuses connected to a network such as a public wireless network have been in widespread use. For example, wireless terminal apparatuses such as mobile phone apparatuses and data communication dedicated terminal apparatuses are known as mobile wireless terminal apparatuses. As fixed wireless terminal apparatuses, wireless terminal apparatuses intended for data collection of vending machines are known.

Moreover, in recent years, a large number of wireless operators are present in each country or region as wireless operators who provide wireless connection services to wireless terminal apparatuses.

To connect a wireless terminal apparatus to a public wireless network, it is necessary to insert a card (card (so-called UICC card) holding contract authentication information) issued by a wireless operator providing wireless connection services into the wireless terminal apparatus. In addition, technology to use the card (UICC card) inserted into a wireless terminal apparatus to store other information is proposed.

For example, a communication system in which, in addition to the USIM function that handles subscriber information, a credit function that handles electronic money or a large-capacity memory card function to the UICC card is proposed (see, for example, Patent Literature 1).

### Citation List

### Patent Literature

Patent Literature 1: JP 2008-210301 A. Other previously proposed arrangements are disclosed in US 2008/261561, and US 2007/213039.

### Summary of Invention

### Technical Problem

According to the above conventional technology, in addition to the USIM function, the credit function and/or the large-capacity memory card function is added to the UICC card and thus, various services related to a wireless terminal apparatus can be integrated on the UICC card.

When a wireless terminal apparatus receives a wireless connection service, according to the above conventional technology, excluding special cases (an emergency or the like), only the wireless connection service via the wireless operator who issued the UICC card inserted into the wireless terminal apparatus can be received. However, a case when a user has a plurality of wireless terminal apparatuses can also be assumed. In such a case, it is important to facilitate the use of the wireless terminal apparatus desired by the user.

The present disclosure is developed in view of the above circumstances and an object thereof is to enable sharing of the right to connect to a network easily among a plurality of wireless terminal apparatuses.

### Solution to Problem

The invention is defined by the appended claims.

The present disclosure is developed to solve the above issue and a first aspect thereof is a wireless terminal apparatus including a receiving unit that receives setting information to share a right of network connection to connect to a predetermined network via a wireless line with one or a plurality of other wireless terminal apparatuses and a control unit that sets the right of network connection based on the setting information and a control method thereof. Accordingly, when setting information is received, an action of setting the right of network connection based on the setting information is exerted.

Also in the first aspect, the right of network connection may be a right to allow a plurality of network connected states in which service contents provided via the network after connection to the network are established is mutually different and the setting information may be information to set the right of network connection that causes the wireless terminal apparatus to enter at least one network connected state of the plurality of network connected states. Accordingly, an action of setting the right of network connection to cause the wireless terminal apparatus to enter at least one network connected state of the plurality of network connected states is exerted.

Also in the first aspect, the plurality of network connected states may include a first network connected state to change the right of network connection and a second network connected state in which provision of a desired service can be received via the network after the connection to the network is established. Accordingly, an action of setting the right of network connection to cause the wireless terminal apparatus to enter at least one network connected state of the first and second network connected states is exerted.

Also in the first aspect, one wireless terminal apparatus constituting the wireless terminal apparatus and the one or the plurality of other wireless terminal apparatuses may be allowed to enter the first network connected state or the second network connected state and the wireless terminal apparatuses other than the one wireless terminal apparatus of wireless terminal apparatuses each constituting the wireless terminal apparatus and the one or the plurality of other wireless terminal apparatuses may be allowed to enter only the first network connected state. Accordingly, an action of allowing one wireless terminal apparatus to enter the first network connected state or the second network connected state and allowing the other wireless terminal apparatuses to enter only the first network connected state is exerted.

Also in the first aspect, the right of network connection may include a plurality of rights of network connection whose service contents provided via the network after the connection to the network is established are mutually different and the control unit may set at least one right of network connection of the plurality of rights of network connection based on the setting information. Accordingly, an action of setting at least one right of network connection of the plurality of rights of network connection based on the setting information is exerted.

Also in the first aspect, the plurality of rights of network connection may include a first right of network connection to change the right of network connection and a second right of network connection in which the provision of a desired service can be received via the network after the connection to the network is established. Accordingly, an action of setting at least one right of network connection of the first and second rights of network connection based on the setting information is exerted.

Also in the first aspect, one wireless terminal apparatus constituting the wireless terminal apparatus and the one or the plurality of other wireless terminal apparatuses may have the first right of network connection and the second right of network connection set thereto and the wireless terminal apparatuses other than the one wireless terminal apparatus of each wireless terminal apparatus constituting the wireless terminal apparatus and the one or the plurality of other wireless terminal apparatuses may have only the first right of network connection set thereto. Accordingly, an action of allowing one wireless terminal apparatus to have the first right of network connection and the second right of network connection set thereto and allowing the other wireless terminal apparatuses to have only the first right of network connection set thereto is exerted.

Also in the first aspect, the first right of network connection may be a right to connect to a first network and the second right of network connection may be a right to connect to a network different from the first network. Accordingly, an action of being connected to the first network when the first right of network connection is set and of being connected to another network when the second right of network connection is set is exerted.

Also in the first aspect, if a connection based on the second right of network connection is established when rewrite information is transmitted to an information processing apparatus that rewrites a content of a database based on the rewrite information after the rewrite information based on a user operation is received by including the database that manages the right of network connection, and that associates and holds each wireless terminal apparatus constituting the wireless terminal apparatus and the one or the plurality of other wireless terminal apparatuses with a type of the right of network connection set to each wireless terminal apparatus, the control unit may exercise control to transmit the rewrite information after a reconnection based on the first right of network connection is established. Accordingly, if the connection based on the second right of network connection is established when rewrite information is transmitted to an information processing apparatus, an action of transmitting the rewrite information after a reconnection based on the first right of network connection is established is exerted.

Also in the first aspect, the receiving unit may receive database information containing the content of the database from the information processing apparatus and the control unit may exercise control to cause a display unit to display the content of the database based on the received database information and to transmit the rewrite information based on a user operation to rewrite the content of the database displayed in the display unit to the information processing apparatus. Accordingly, an action of causing the content of the database to be displayed based on the received database information and of transmitting the rewrite information based on a user operation to rewrite the displayed content of the database to the information processing apparatus is exerted.

### Brief Description of Drawings

[Fig. 1] Fig. 1 is a diagram showing examples of using a plurality of wireless terminal apparatuses according to a first embodiment of the present disclosure in a simplified form.
[Fig. 2] Fig. 2 is a block diagram showing a system configuration example of a communication system 100 according to the first embodiment of the present disclosure.
[Fig. 3] Fig. 3 is a flow chart showing an example of a processing procedure of communication processing by the wireless terminal apparatus according to the first embodiment of the present disclosure.
[Fig. 4] Fig. 4 is a diagram schematically showing a wireless terminal apparatus management database 220 according to the first embodiment of the present disclosure.
[Fig. 5] Fig. 5 is a block diagram showing an internal configuration example of a first wireless terminal apparatus 300 according to the first embodiment of the present disclosure.
[Fig. 6] Fig. 6 is a diagram showing a display screen example displayed in the first wireless terminal apparatus 300 and a second wireless terminal apparatus 400 according to the first embodiment of the present disclosure.
[Fig. 7] Fig. 7 is a diagram showing a display screen example displayed in the first wireless terminal apparatus 300 and the second wireless terminal apparatus 400 according to the first embodiment of the present disclosure.
[Fig. 8] Fig. 8 is a sequence chart showing a communication processing example between each apparatus constituting the communication system 100 according to the first embodiment of the present disclosure.
[Fig. 9] Fig. 9 is a flow chart showing an example of the processing procedure of communication processing by the first wireless terminal apparatus 300 according to the first embodiment of the present disclosure.
[Fig. 10] Fig. 10 is a flow chart showing an example of the processing procedure of communication processing by the second wireless terminal apparatus 400 according to the first embodiment of the present disclosure.
[Fig. 11] Fig. 11 is a diagram schematically showing the wireless terminal apparatus management database 220 according to a modification of the first embodiment of the present disclosure.
[Fig. 12] Fig. 12 is a sequence chart showing the communication processing between each apparatus constituting the communication system 100 according to a second embodiment of the present disclosure.
[Fig. 13] Fig. 13 is a block diagram showing a system configuration example of a communication system 600 according to a third embodiment of the present disclosure.
[Fig. 14] Fig. 14 is a diagram schematically showing each wireless terminal apparatus management database according to the third embodiment of the present disclosure.
[Fig. 15] Fig. 15 is a diagram showing a display screen example displayed in the first wireless terminal apparatus 300 and the second wireless terminal apparatus 400 according to the third embodiment of the present disclosure.
[Fig. 16] Fig. 16 is a sequence chart showing a communication processing example between each apparatus constituting the communication system 600 according to the third embodiment of the present disclosure.
[Fig. 17] Fig. 17 is a block diagram showing a system configuration example of a communication system 670 according to a fourth embodiment of the present disclosure.
[Fig. 18] Fig. 18 is a diagram schematically showing a wireless terminal apparatus management database 690 according to the fourth embodiment of the present disclosure.
[Fig. 19] Fig. 19 is a diagram showing display screen examples displayed in the first wireless terminal apparatus 300 and a third wireless terminal apparatus 800 according to the fourth embodiment of the present disclosure.
[Fig. 20] Fig. 20 is a diagram showing a display screen example displayed in the first wireless terminal apparatus 300 and the third wireless terminal apparatus 800 according to the fourth embodiment of the present disclosure.
[Fig. 21] Fig. 21 is a sequence chart showing a communication processing example between each apparatus constituting the communication system 670 according to the fourth embodiment of the present disclosure.
[Fig. 22] Fig. 22 is a sequence chart showing a communication processing example between each apparatus constituting the communication system 670 according to the fourth embodiment of the present disclosure.
[Fig. 23] Fig. 23 is a sequence chart showing a communication processing example between each apparatus constituting the communication system 670 according to the fourth embodiment of the present disclosure.
[Fig. 24] Fig. 24 is a block diagram showing a system configuration example of a communication system 780 according to a fifth embodiment of the present disclosure.
[Fig. 25] Fig. 25 is a diagram schematically showing a wireless terminal apparatus management database 810 according to the fifth embodiment of the present disclosure.
[Fig. 26] Fig. 26 is a sequence chart showing a communication processing example between each apparatus constituting the communication system 780 according to the fifth embodiment of the present disclosure.
[Fig. 27] Fig. 27 is a sequence chart showing a communication processing example between each apparatus constituting the communication system 780 according to the fifth embodiment of the present disclosure.
[Fig. 28] Fig. 28 is a sequence chart showing a communication processing example between each apparatus constituting the communication system 780 according to the fifth embodiment of the present disclosure.
[Fig. 29] Fig. 29 is a sequence chart showing a communication processing example between each apparatus constituting the communication system 780 according to the fifth embodiment of the present disclosure.
[Fig. 30] Fig. 30 is a sequence chart showing a communication processing example between each apparatus constituting the communication system 780 according to the fifth embodiment of the present disclosure.
[Fig. 31] Fig. 31 is a sequence chart showing a communication processing example between each apparatus constituting the communication system 780 according to the fifth embodiment of the present disclosure.
[Fig. 32] Fig. 32 is a sequence chart showing a communication processing example between each apparatus constituting the communication system 780 according to the fifth embodiment of the present disclosure.

### Description of Embodiments

Forms (hereinafter, called embodiments) to carry out the present disclosure will be described below. The description thereof will be provided in the order shown below:
1. First embodiment (setting control of the right of network connection: example of sharing the right of network connection among a plurality of wireless terminal apparatuses present in a close range)
2. Second embodiment (setting control of the right of network connection: example of sharing the right of network connection among a plurality of wireless terminal apparatuses present in a long range)
3. Third embodiment (setting control of the right of network connection: example of sharing the right of network connection related to a plurality of wireless operators among a plurality of wireless terminal apparatuses)
4. Fourth embodiment (setting control of the right of network connection: example of setting the right of network connection by an apparatus other than a network control apparatus)
5. Fifth embodiment (setting control of the right of network connection: example of sharing two different rights of network connection among a plurality of wireless terminal apparatuses)
   The second, third, fourth, and fifth embodiments should be considered as exemplary embodiments only, and may not fall entirely within the scope of the claims.

### <1. First embodiment>

### [Example of using wireless terminal apparatuses]

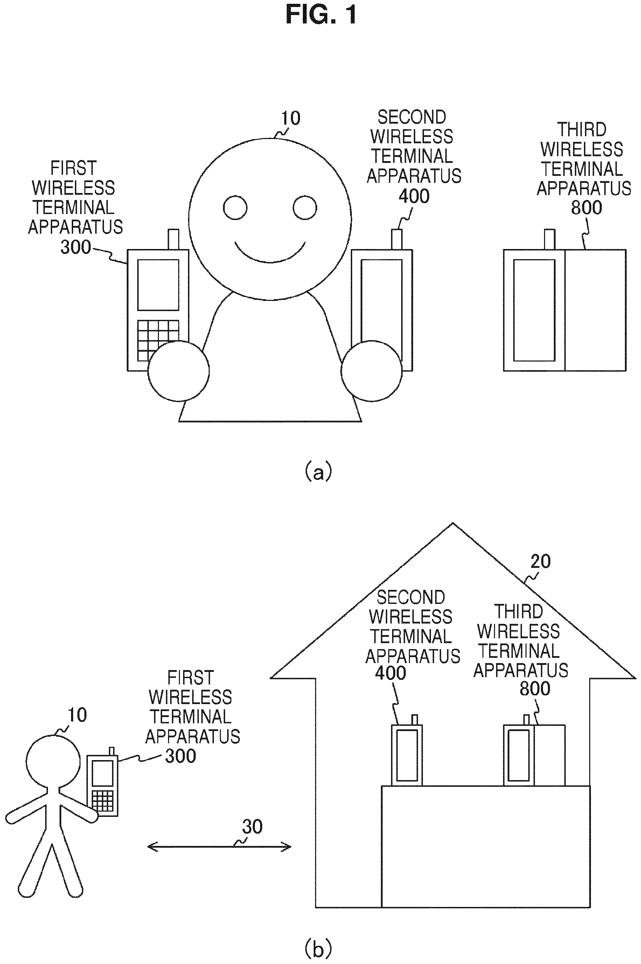

Fig. 1 is a diagram showing examples of using a plurality of wireless terminal apparatuses according to a first embodiment of the present disclosure in a simplified form.

Fig. 1(a) shows a state in which a user 10 uses a plurality of wireless terminal apparatuses (the wireless terminal apparatus 300, the second wireless terminal apparatus 400, and the third wireless terminal apparatus 800). Fig. 1(b) shows a state in which the one user 10 uses one wireless terminal apparatus (the wireless terminal apparatus 300) by holding the apparatus by hand. Fig. 1(b) also shows a state in which the other wireless terminal apparatuses (the second wireless terminal apparatus 400 and the third wireless terminal apparatus 800) are placed in a relatively distance location (the distance indicated by an arrow 30 apart). For example, a case when the user 10 who left the second wireless terminal apparatus 400 and the third wireless terminal apparatus 800 in a house 20 uses the first wireless terminal apparatus 300 in his (her) workplace can be assumed.

The first wireless terminal apparatus 300 is, for example, a mobile phone apparatus (for example, a mobile phone apparatus including a call function and a data communication function) and the second wireless terminal apparatus 400 is, for example, a mobile phone apparatus (for example, a smartphone). The third wireless terminal apparatus 800 is, for example, an electronic book display apparatus including a wireless communication function.

### [Configuration example of the communication system]

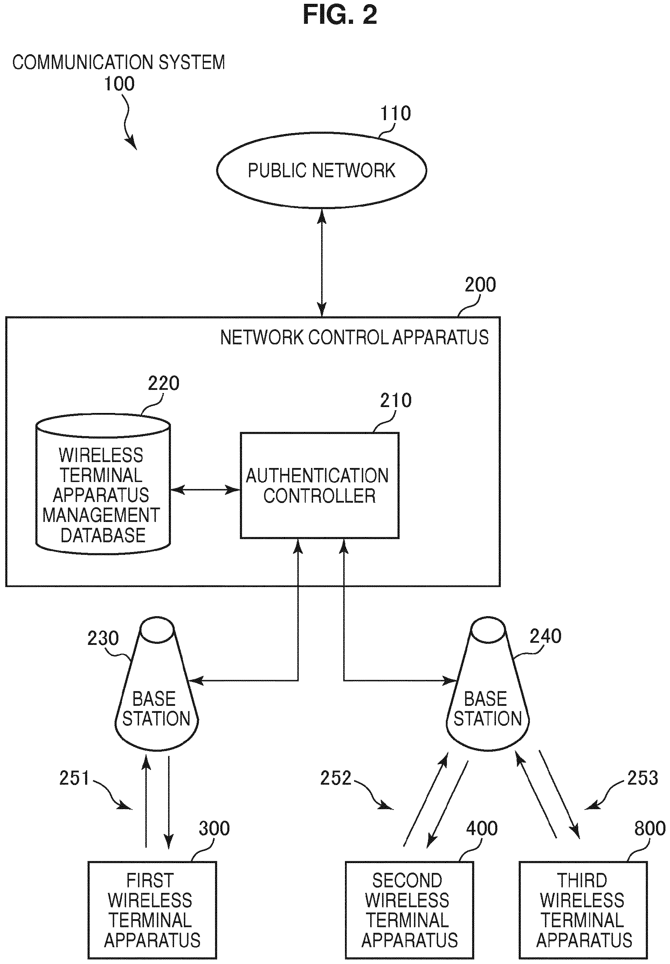

Fig. 2 is a block diagram showing a system configuration example of the communication system 100 according to the first embodiment of the present disclosure.

The communication system 100 includes a public network 110, a network control apparatus 200, base stations 230, 240, the first wireless terminal apparatus 300, the second wireless terminal apparatus 400, and the third terminal apparatus 800.

The public network 110 is a public network such as a telephone network and the Internet.

The public network 110 and the network control apparatus 200 are connected via a gateway (not shown).

The base stations 230, 240 are mobile communication base stations (NodeB) that connect the first wireless terminal apparatus 300, the second wireless terminal apparatus 400, or the third wireless terminal apparatus 800 and the network control apparatus 200 via wireless lines 251 to 253.

In the communication system 100, for example, the first wireless terminal apparatus 300 is connected to the base station 230 via the wireless line 251 and connected to the network control apparatus 200 via the base station 230. Similarly, the second wireless terminal apparatus 400 is connected to the base station 240 via the wireless line 252 and connected to the network control apparatus 200 via the base station 240. Similarly, the third wireless terminal apparatus 800 is connected to the base station 240 via the wireless line 253 and connected to the network control apparatus 200 via the base station 240. Incidentally, each of the first wireless terminal apparatus 300, the second wireless terminal apparatus 400, and the third wireless terminal apparatus 800 can be connected to both of the base stations 230, 240 in accordance with the position where the apparatus is used.

The network control apparatus 200 is a communication control apparatus managed by a wireless operator providing wireless connection services and includes an authentication controller 210 and the wireless terminal apparatus management database 220. The network control apparatus 200 is an example an information processing apparatus described in claims.

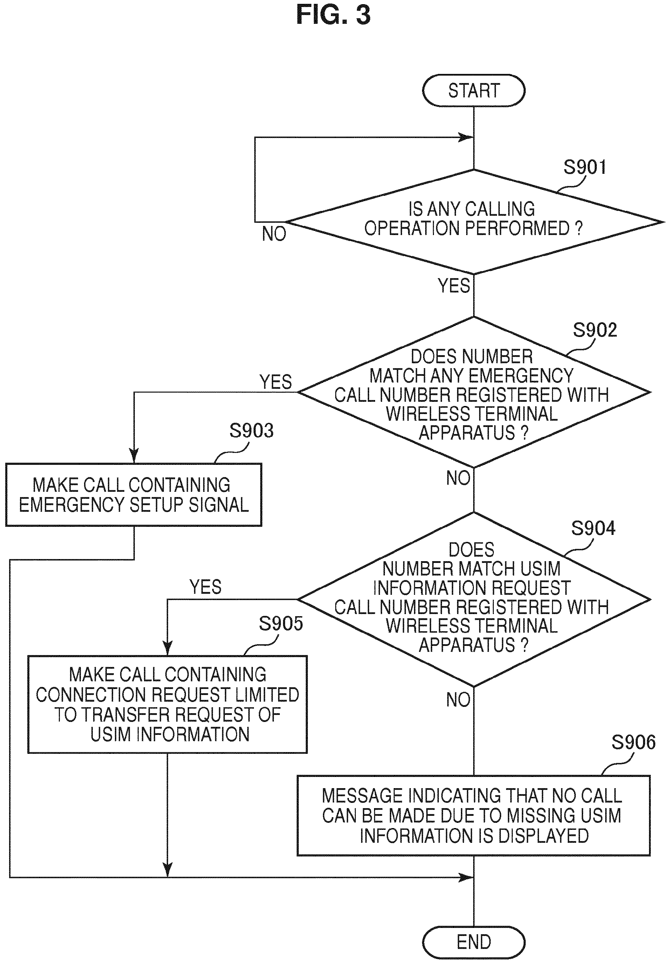

The authentication controller 210 controls authentication of a wireless terminal apparatus connected via the base stations 230, 240. Excluding special cases, the authentication controller 210 authenticates, among wireless terminal apparatuses connected via the base stations 230, 240, only wireless terminal apparatuses holding valid USIM information (contract authentication information). The USIM information is an example of contract authentication information and is information containing subscriber information of the phone and information of authentication. The special cases will be described in detail with reference to Fig. 3. The network control apparatus 200 connects the authenticated wireless terminal apparatus to the public network 110 via a gateway (not shown). The authentication controller 210 is an example of a control apparatus described in claims.

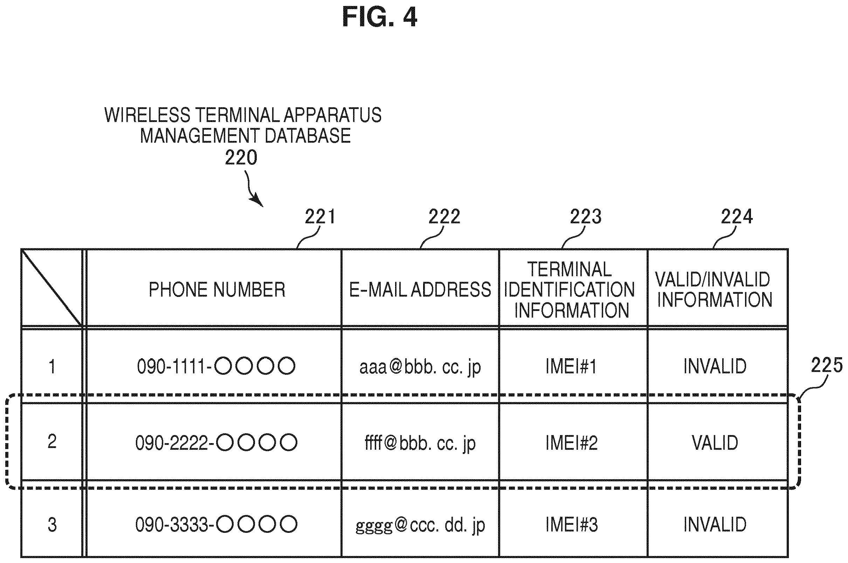

The wireless terminal apparatus management database 220 is a database for the wireless operator providing wireless connection services to manage one or a plurality of wireless terminal apparatuses. The wireless terminal apparatus management database 220 will be described in detail with reference to Fig. 4 or the like. The wireless terminal apparatus management database 220 is an example of a database described in claims.

### [Connection example when USIM information transfer is requested]

The connection method by which a wireless terminal apparatus holding no valid USIM information is connected to the public network 110 will be described. A case when no valid USIM information is held means, for example, a case when USIM information itself is not held or only USIM information invalidated by invalidation processing of USIM information is held.

Currently, an ordinary mobile phone apparatus can be connected for Emergency Call even if no USIM information is held (that is, no UICC card is inserted). The Emergency Call is, for example, a case when a call is made to the police or fire station.

For example, a mobile phone apparatus in a state in which no USIM information is held and no call is made is assumed. The mobile phone apparatus is in a state in which any base station (for example, a base station with high field intensity) capable of accepting without identifying the wireless operator is selected (Camped on Any Cell Mode of Idle mode). In this state, only when the phone number of an emergency call (emergency call number) registered in advance is input by the user, the mobile phone apparatus transmits an EMERGENCY SETUP signal to MSC via mobile communication base stations and RNC as emergency call submission. RNC (Radio Network Controller) corresponds to, for example, the network control apparatus 200. MSC (Mobile-services switching Center) is an interface between a fixed network (public network 110) and a mobile communication network. Accordingly, the mobile phone apparatus enters a connected mode after leaving the idle mode to enable a call.

In the first embodiment of the present disclosure, the above connected method is extended to temporarily enable access to a network (public network 110) to request the transfer of USIM information (right of use of USIM information)

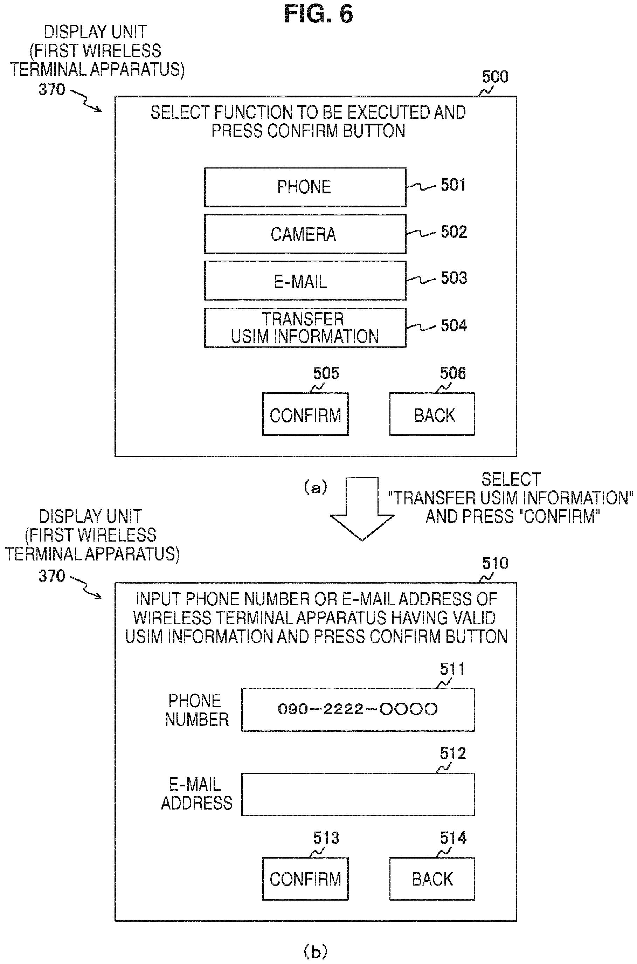

For example, the network can temporarily be accessed by a call being made by the user to a dedicated phone number to request the transfer of USIM information. Also when a user operation using a menu screen (for example, a display screen 500 shown in Fig. 6A) or an operation member (a button or the like) provided on the side face of the apparatus is performed, temporary access to the network can be enabled by a call being made to the dedicated phone number.

Random access processing defined in the standardized specifications 3GPP of a mobile communication system is used to access the network. For example, Access Category can be set to random access and also Access Category can be set to a transfer request of USIM information. Accordingly, Access Category that is different from Emergency Call can be set.

When, for example, a wireless terminal apparatus (wireless terminal apparatus of the request source) accesses with Access Category for requesting the transfer of USIM information, a limited network connection is provided to the wireless terminal apparatus of the request source. Then, after the limited connection is permitted to the wireless terminal apparatus of the request source, the wireless terminal apparatus of the request source is notified of information (information about the transfer request of USIM information) from the wireless terminal apparatus of the transfer request destination of USIM information (wireless terminal apparatus of the request destination).

Thus, when a wireless terminal apparatus of the request source holding no valid USIM information is connected to the network via a limited connection, the network maintains the limited connection to the wireless terminal apparatus of the request source. The network secures normal connection to the wireless terminal apparatus of the request destination together with maintenance of the limited connection so that communication of information about the transfer request of USIM information is enabled.

Fig. 3 is a flow chart showing an example of a processing procedure of communication processing by the wireless terminal apparatus according to the first embodiment of the present disclosure. In this example, a case when a wireless terminal apparatus holding no valid USIM information establishes a limited connection by a calling operation will be described. Also an example in which a USIM information request call number is registered with the wireless terminal apparatus to establish the limited connection and the USIM information request call number is used when the limited connection is established will be shown.

First, whether any calling operation is performed is determined (step S901) and if no calling operation is performed, monitoring is continued.

If a calling operation is performed (step S901), whether the number input by the calling operation matches any emergency call number registered with the wireless terminal apparatus is determined (step S902). If the number input by the calling operation matches one of emergency call numbers (step S902), a call containing the EMERGENCY SETUP signal is made (step S903). Accordingly, the wireless terminal apparatus enters the connected mode after leaving the idle mode to enable a call.

On the other hand, if the number input by the calling operation matches none of emergency call numbers (step S902), whether the number input by the calling operation matches the USIM information request call number registered with the wireless terminal apparatus is determined (step S904). If the number input by the calling operation matches the USIM information request call number (step S904), a call containing a connection request limited to a transfer request of USIM information is made (step S905). Accordingly, the wireless terminal apparatus enters the connected mode after leaving the idle mode to enable a call.

If the number input by the calling operation does not match the USIM information request call number (step S904), a message indicating that a call cannot be made because no valid USIM information is held is displayed (step S906).

### [Configuration example of the wireless terminal apparatus management database]

Fig. 4 is a diagram schematically showing the wireless terminal apparatus management database 220 according to the first embodiment of the present disclosure.

The wireless terminal apparatus management database 220 is a database that manages USIM information held by each of the first wireless terminal apparatus 300, the second wireless terminal apparatus 400, and the third wireless terminal apparatus 800. More specifically, a phone number 221, an e-mail address 222, terminal identification information 223, and valid/invalid information 224 are associated and recorded in the wireless terminal apparatus management database 220. The above information is recorded in the wireless terminal apparatus management database 220 based on, for example, operation input by the user 10 using the first wireless terminal apparatus 300, the second wireless terminal apparatus 400, or the third wireless terminal apparatus 800. Alternatively, the wireless operator providing wireless connection services may make a record in the wireless terminal apparatus management database 220 based on contract content with the user 10.

The phone number 221 stores the phone number of a wireless terminal apparatus. The e-mail address 222 stores the e-mail address of a wireless terminal apparatus. The phone number and e-mail address of a wireless terminal apparatus are identification information of the wireless terminal apparatus and are used when the transfer of USIM information (right of use of USIM information) is requested.

The terminal identification information 223 stores the terminal identification number of a wireless terminal apparatus. The terminal identification information is identification information to identify the wireless terminal apparatus and, for example, IMEI (International Mobile Equipment Identity) is stored. In Fig. 4, it is assumed that "IMEI#1" of the terminal identification information 223 corresponds to the first wireless terminal apparatus 300. Similarly, it is assumed that "IMEI#2" of the terminal identification information 223 corresponds to the second wireless terminal apparatus 400 and "IMEI#3" of the terminal identification information 223 corresponds to the third wireless terminal apparatus 800.

The valid/invalid information 224 stores information indicating whether USIM information held by the wireless terminal apparatus is valid or invalid. In Fig. 4, "Valid" is shown for wireless terminal apparatuses whose USIM information is valid and "Invalid" is shown for wireless terminal apparatuses whose USIM information is invalid. In addition, each piece of information about wireless terminal apparatuses whose USIM information is valid by enclosing such information with a thick rectangle 225.

### [Configuration example of the wireless terminal apparatus]

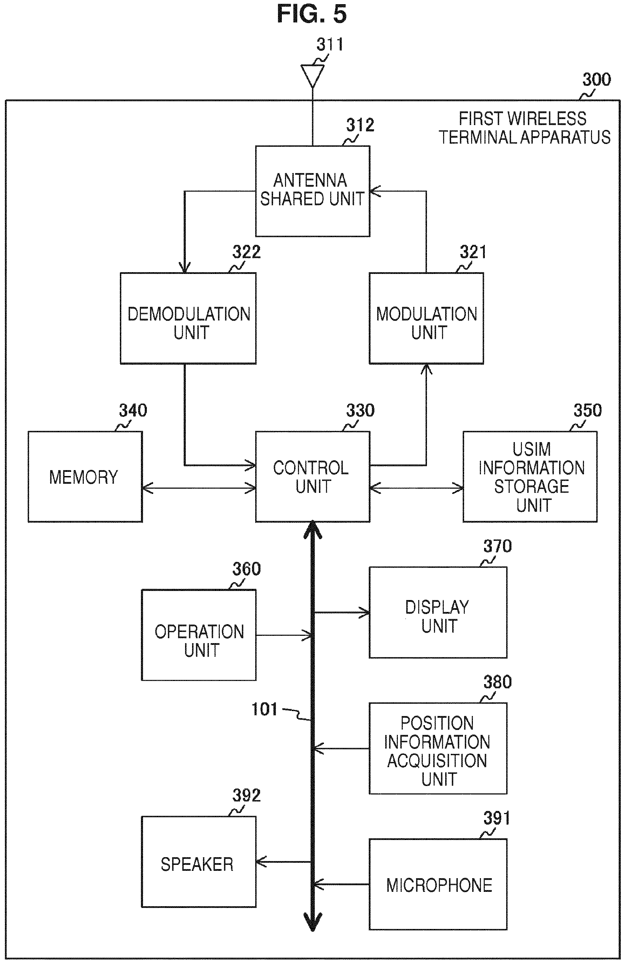

Fig. 5 is a block diagram showing an internal configuration example of the first wireless terminal apparatus 300 according to the first embodiment of the present disclosure. The internal configuration of the second wireless terminal apparatus 400 and the third wireless terminal apparatus 800 is similar to that of the first wireless terminal apparatus 300 and thus, the description thereof here is omitted.

The first wireless terminal apparatus 300 includes an antenna 311, an antenna shared unit 312, a modulation unit 321, a demodulation unit 322, a control unit 330, a memory 340, and a USIM information storage unit 350. The first wireless terminal apparatus 300 also includes an operation unit 360, a display unit 370, a position information acquisition unit 380, a microphone 391, and a speaker 392. The first wireless terminal apparatus 300 is realized by, for example, a mobile phone apparatus capable of performing calls and data communication.

When, for example, reception processing is performed, a radio wave received by the antenna 311 is demodulated by the demodulation unit 322 after going through the antenna shared unit 312 and the demodulated received data is supplied to the control unit 330. If the reception processing is call reception processing, the demodulated received data (audio data) goes through the control unit 330 before being output from the speaker 392 as a voice. The antenna 311, the antenna shared unit 312, and the demodulation unit 322 are examples of a receiving unit described in claims.

When, for example, transmission processing is performed, transmission data output by the control unit 330 is modulated by the modulation unit 321 and the modulated transmission data is transmitted from the antenna 311 after going through the antenna shared unit 312. If the transmission processing is call transmission processing, audio data input from the microphone 391 is modulated by the modulation unit 321 after going through the control unit 330 and the modulated transmission data (audio data) is transmitted from the antenna 311 after going through the antenna shared unit 312.

The control unit 330 exercises various kinds of control based on a control program stored in the memory 340. The control unit 330 is constituted of, for example, a microprocessor. The control unit 330 is connected to, for example, the modulation unit 321 and the demodulation unit 322 and transmits/receives various kinds of data to/from the network control apparatus 200 connected via the base stations 230, 240.

The memory 340 is a memory to store a control program for the control unit 330 to exercise various kinds of control, transmission data, received data and the like. The memory 340 is constituted of, for example, a ROM (Read Only Memory) or RAM (Random Access Memory).

The USIM information storage unit 350 is a memory to hold USIM information (contract authentication information). As the USIM information storage unit 350, for example, a UICC (Universal Integrated Circuit) card may be used or a dedicated memory to maintain USIM information securely may be used. When a UICC card is used as the USIM information storage unit 350, a UICC card capable of performing processing to enable or disable USIM information is used, instead of a UICC card into which USIM information is fixedly written. That is, a UICC card in which the control unit 330 can perform processing to enable or disable USIM information based on transfer information received by the antenna 311 and demodulated. In addition, a UICC card capable of rewriting USIM information is used. The processing to enable or disable USIM information can be performed by enable processing and disable processing defined by 3GPP (Third Generation Partnership Project). Each piece of such processing is performed by, for example, sales shops of mobile phone apparatuses.

If an instruction operation (predetermined operation) by the user instructing a transfer request that requests the transfer of the right of use of USIM information related to a wireless operator providing wireless connection services is accepted by the operation unit 360, the control unit 330 causes transmission of the transfer request via a wireless line. The transfer request is a transfer request that requests the transfer of the right of use of USIM information held in the USIM information storage unit 350 of another wireless terminal apparatus. The control unit 330 causes transmission of the transfer request via a wireless line by, for example, a limited connection that establishes only a restricted connection without using USIM information. The right of use of USIM information is a right to use USIM information. The right of use of USIM information can be transferred by, for example, enable processing and disable processing of the USIM information. Also, the right of use of USIM information can be transferred by transfer processing of USIM information itself. In addition, the right of use of USIM information can be grasped also as a right of network connection. For example, the presence/absence of the right of network connection can be decided by the presence/absence of the right of use of USIM information.

When transfer information (information causing the transfer of the right of use of USIM information) transmitted via a wireless line in response to the transfer request is received, the control unit 330 sets valid USIM information based on the received transfer information. The transfer information is transmitted by the authentication controller 210 based on, for example, management content of the wireless terminal apparatus management database 220.

When the right of use of USIM information is transferred by enable processing and disable processing of USIM information, enable information to enable USIM information held in the USIM information storage unit 350 is contained in transfer information. Then, based on enable information contained in the received transfer information, the control unit 330 sets valid USIM information by enabling USIM information held in the USIM information storage unit 350.

Also, the network control apparatus 200 exercises control to enable USIM information held in the USIM information storage unit 350 by transmitting transfer information to the first wireless terminal apparatus 300 in response to the transfer request. Also, the network control apparatus 200 exercises control to disable USIM information held in the USIM information storage unit 350 of the second wireless terminal apparatus 400.

When the right of use of USIM information is transferred by transfer processing of the USIM information, USIM information held in the USIM information storage unit 350 of the second wireless terminal apparatus 400 is contained in transfer information. To carry out this transfer, the control unit 330 transmits a transfer request to the second wireless terminal apparatus 400. After the transmission of the transfer request, USIM information held in the second wireless terminal apparatus 400 is disabled and transfer information is transmitted from the second wireless terminal apparatus 400 or the network control apparatus 200. Then, the control unit 330 sets valid USIM information by causing the USIM information storage unit 350 to record USIM information contained in the received transfer information.

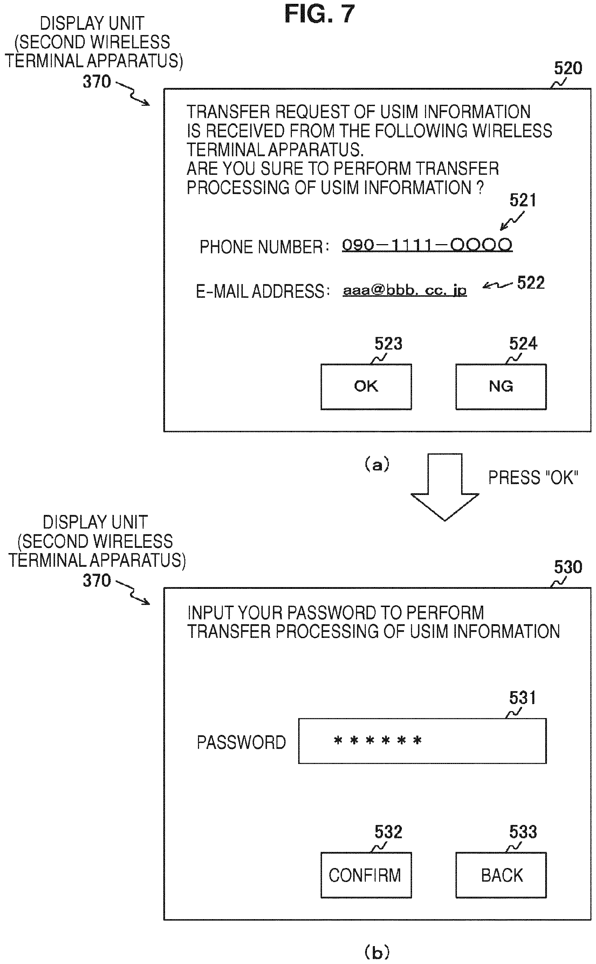

When the first wireless terminal apparatus 300 is the transfer request destination, the control unit 330 causes transmission of transfer information to the transfer request source via a wireless line when a transfer request is received. In this case, when the transfer request is received, the control unit 330 causes the display unit 370 to display a confirmation screen (for example, display screens 520, 530 shown in Fig. 7) to allow the user to confirm the transfer of the right of use of USIM information held in the USIM information storage unit 350. If operation input to permit the transfer of the right of use of USIM information held in the USIM information storage unit 350 is accepted by the operation unit 360 after the confirmation screen is displayed, the control unit 330 causes transmission of the transfer information via a wireless line.

The operation unit 360 is an operation acceptance unit that accepts operation input operated by the user and outputs a signal in accordance with the accepted operation input to the control unit 330. The operation unit 360 includes various kinds of keys such as numeric keys and alphabetical keys and accepts an instruction operation (predetermined operation) by the user instructing a transfer request that requests the transfer of the right of use of USIM information related to a wireless operator providing wireless connection services.

The display unit 370 is a display unit that displays various kinds of information (character information, time information and the like) based on control of the control unit 330. The display unit 370 displays, for example, each piece of information (for example, display screens shown in FIGS. 6 and 7) related to transfer processing of the right of use of USIM information. As the display unit 370, for example, a display panel such as an organic EL (Electro Luminescence) panel and LCD (Liquid Crystal Display) panel can be used. The operation unit 360 and the display unit 370 can integrally be configured by using a touch panel in which operation input can be done by the display surface thereof being touched by a finger of the user or a finger of the user being brought closer to the display surface.

The position information acquisition unit 380 acquires position information indicating the position where the first wireless terminal apparatus 300 is located and outputs the acquired position information to the control unit 330. The position information acquisition unit 380 can be realized by a GPS (Global Positioning System) unit that calculates position information based on a GPS signal received by a GPS signal receiving antenna (not shown). The calculated position information contains each piece of data on the position such as the latitude, longitude, altitude and the like when the GPS signal is received. Alternatively, a position information acquisition apparatus that acquires position information by a different acquisition method of position method may be used. For example, a position information acquisition apparatus that acquires position information by deriving position information by using access point information by wireless LAN (Local Area Network) present therearound.

### [Communication example between each apparatus]

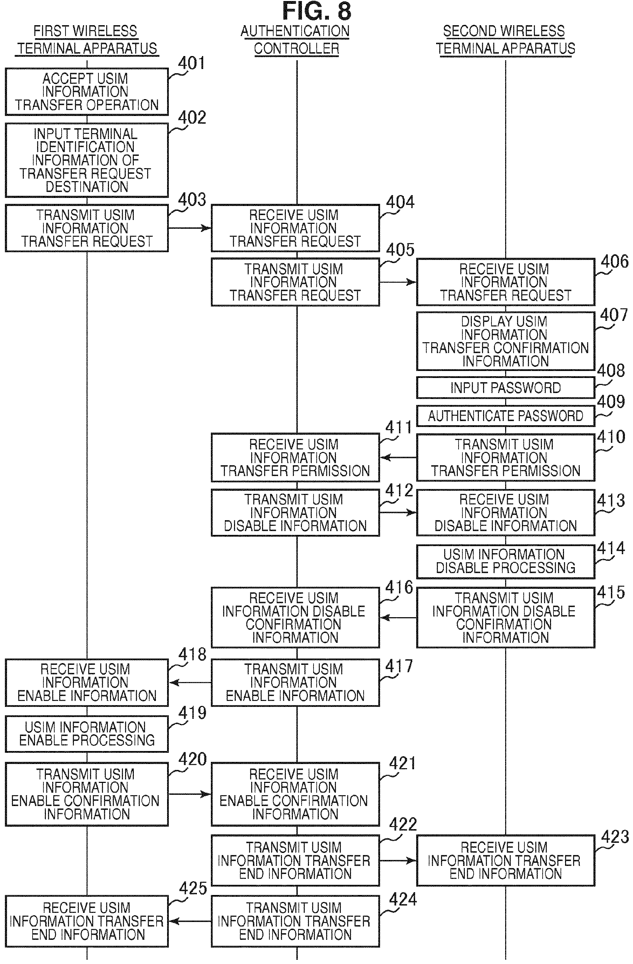

Figs. 6 and 7 are diagrams showing display screen examples displayed in the first wireless terminal apparatus 300 and the second wireless terminal apparatus 400 according to the first embodiment of the present disclosure. These display screens will be described in detail with reference to the sequence chart shown in Fig. 8.

Fig. 8 is a sequence chart showing a communication processing example between each apparatus constituting the communication system 100 according to the first embodiment of the present disclosure. In Figs. 6 to 8, only communication processing examples between the first wireless terminal apparatus 300 and the second wireless terminal apparatus 400 are shown, but the first embodiment can similarly be applied to communication processing between other wireless terminal apparatuses.

Fig. 8 shows an example in which both of the first wireless terminal apparatus 300 and the second wireless terminal apparatus 400 hold USIM information and the right of use of USIM information is transferred by enable/disable control by the authentication controller 210 of the network control apparatus 200. Also in Fig. 8, communication processing when the first wireless terminal apparatus 300 makes a transfer request to the second wireless terminal apparatus 400 when the second wireless terminal apparatus 400 holds valid USIM information is taken as an example.

First, a display screen to perform a USIM information transfer operation (transfer request operation of the right of use of USIM information) is displayed in the display unit 370 of the first wireless terminal apparatus 300.

Fig. 6A shows an example (display screen 500) of the display screen to perform a USIM information transfer operation. The display screen 500 is a display screen to select a function the first wireless terminal apparatus 300 is caused to execute. More specifically, the display screen 500 is provided with a phone button 501, a camera button 502, an e-mail button 503, a transfer button 504 of USIM information, a confirm button 505, and a back button 506.

The phone button 501 is a button pressed when the call function is used, the camera button 502 is a button pressed when the camera function is used, and the e-mail button 503 is a button pressed when the e-mail function is used.

The transfer button 504 of USIM information is a button pressed when the right of use of valid USIM information held by another wireless terminal apparatus is transferred. Incidentally, the transfer button 504 of USIM information is assumed to be not displayed when valid USIM information is held in the USIM information storage unit 350.

The confirm button 505 is a button pressed when, after a pressing operation to select one of the phone button 501, the camera button 502, the e-mail button 503, and the transfer button 504 of USIM information is performed, the selection is confirmed.

The back button 506 is a button pressed to return to, for example, the display screen displayed immediately before. This applies also to back buttons 514, 533 shown in Figs. 6B and 7B respectively.

It is assumed here that in the display screen 500 shown in Fig. 6A, the confirm button 505 is pressed after the transfer button 504 of USIM information is pressed (401). If the USIM information transfer operation is accepted as described above (401), the display screen to input terminal identification information is displayed in the display unit 370 of the first wireless terminal apparatus 300.

Fig. 6B shows an example of the display screen (display screen 510) to input terminal identification information. The display screen 510 is a display screen to input terminal identification information to identify the wireless terminal apparatus of the transfer source from which the right of use of USIM information is transferred. More specifically, the display screen 510 is provided with a phone number input field 511, an e-mail address input field 512, a confirm button 513, and a back button 514.

The phone number input field 511 is an area into which the phone number of the wireless terminal apparatus of the transfer source is input as terminal identification information of the wireless terminal apparatus of the transfer source from which the right of use of USIM information is transferred.

The e-mail address input field 512 is an area into which the e-mail address of the wireless terminal apparatus of the transfer source is input as terminal identification information of the wireless terminal apparatus of the transfer source from which the right of use of USIM information is transferred. In this example, an example in which the wireless terminal apparatus of the transfer source is identified by inputting one of the phone number and the e-mail address of the wireless terminal apparatus of the transfer source is shown. The input into the phone number input field 511 and the e-mail address input field 512 is done by operation input in the operation unit 360.

The confirm button 513 is a button pressed when, after an input operation into the phone number input field 511 or the e-mail address input field 512 is performed, the input is confirmed.

It is assumed here that in the display screen 510 shown in Fig. 6B, the confirm button 513 is pressed after an input operation (090-2222-0000) into the phone number input field 511 is performed (402). In this manner, terminal identification information of the wireless terminal apparatus of the transfer source (transfer request destination) from which the right of use of USIM information is transferred (402). In this case, a USIM information transfer request containing the input terminal identification information is transmitted from the first wireless terminal apparatus 300 to the authentication controller 210 of the network control apparatus 200 (403, 404). The USIM information transfer request contains terminal identification information of the transfer request source (transfer destination) together with terminal identification information of the transfer request destination (transfer source). The USIM information transfer request is transmitted from the first wireless terminal apparatus 300 to the authentication controller 210 of the network control apparatus 200 via the above limited connection.

When the USIM information transfer request is received (404), the authentication controller 210 checks the content of the wireless terminal apparatus management database 220 and then transmits the USIM information transfer request to the wireless terminal apparatus identified based on terminal identification information contained in the received USIM information transfer request (405). In this example, the USIM information transfer request is transmitted to the second wireless terminal apparatus 400 corresponding to the terminal identification information (090-2222-0000) (405). When the USIM information transfer request is received, the authentication controller 210 checks, for example, whether the wireless terminal apparatus identified based on terminal identification information contained in the USIM information transfer request by using the wireless terminal apparatus management database 220. In addition, the authentication controller 210 acquires each piece of information (the phone number, e-mail address and the like) about the transfer destination (first wireless terminal apparatus 300) the transfer source (second wireless terminal apparatus 400) is caused to display from the wireless terminal apparatus management database 220. Then, the authentication controller 210 transmits the USIM information transfer request containing each piece of information about the acquired transfer destination (first wireless terminal apparatus 300) (405).

When the second wireless terminal apparatus 400 receives the USIM information transfer request (406), the display screen to cause the user to confirm the transfer of the right of use of USIM information is displayed in the display unit 370 of the second wireless terminal apparatus 400 (407).

In Fig. 7A, an example of the display screen (display screen 520) causing the user to confirm the transfer of the right of use of USIM information is shown. The display screen 520 is a display screen to allow the user to confirm the transfer of USIM information by displaying information to identify the wireless terminal apparatus of the transfer destination to which the right of use of USIM information is transferred. More specifically, the display screen 520 is provided with a phone number display field 521, an e-mail address display field 522, an OK button 523, and an NG button 524.

The phone number display field 521 is an area where the phone number of the wireless terminal apparatus of the transfer destination is displayed as terminal identification information of the wireless terminal apparatus of the transfer destination to which the right of use of USIM information is transferred.

The e-mail address display field 522 is an area where the e-mail address of the wireless terminal apparatus of the transfer destination is displayed as terminal identification information of the wireless terminal apparatus of the transfer destination to which the right of use of USIM information is transferred.

In this example, an example in which the user is notified of the wireless terminal apparatus of the transfer destination by simultaneously displaying the phone number and the e-mail address of the wireless terminal apparatus of the transfer destination is shown. Incidentally, the display screen 520 may be caused to display other information (for example, the owner name) contained in the USIM information transfer request transmitted from the authentication controller 210. In addition, based on, for example, registration information (for example, a telephone directory) held by the second wireless terminal apparatus 400, other information (for example, the owner name) about the wireless terminal apparatus of the transfer destination may be made to be displayed together with the phone number and the e-mail address.

The OK button 523 is a button pressed after the user confirms that the right of use of USIM information is transferred to the wireless terminal apparatus whose terminal identification information is displayed in the phone number display field 521 and the e-mail address display field 522.

The NG button 524 is a button pressed when the user does not approve of the transfer of the right of use of USIM information to the wireless terminal apparatus whose terminal identification information is displayed in the phone number display field 521 and the e-mail address display field 522.

It is assumed here that in the display screen 520 shown in Fig. 7A, the OK button 523 is pressed (407). When the OK button 523 is pressed after the transfer of the right of use of USIM information is confirmed (407), the display screen to input the password used when the right of use of USIM information is transferred is displayed in the display unit 370 of the second wireless terminal apparatus 400 (408).

Fig. 7B shows an example of the display screen (display screen 530) to input the password. The display screen 530 is a display screen to input the password used when the right of use of USIM information is transferred. More specifically, the display screen 530 is provided with a password input field 531, a confirm button 532, and a back button 533.

The password input field 531 is an area where the password used when the right of use of USIM information is transferred is input.

The confirm button 532 is a button pressed when, after an input operation into the password input field 531 is performed, the input is confirmed.

It is assumed here that in the display screen 530 shown in Fig. 7B, for example, the password "123abc (the password is not displayed in the actual screen from the viewpoint of security and "******" is shown in Fig. 7B)" is input (408). When the password is input as shown above (408), the control unit 330 of the second wireless terminal apparatus 400 performs authentication processing of the input password (409). Then, if the input password is authenticated (409), USIM information transfer permission (transfer information) to permit the transfer of the right of use of USIM information is transmitted from the second wireless terminal apparatus 400 to the authentication controller 210 of the network control apparatus 200 (410, 411). If the input password is not authenticated (409), the display screen to prompt input of the correct password is displayed.

Subsequently, when the USIM information transfer permission is received (411), the authentication controller 210 transmits USIM information disable information to disable USIM information of the wireless terminal apparatus having transmitted the USIM information transfer permission to the second wireless terminal apparatus 400 (412, 413). When the USIM information disable information is received (413), the second wireless terminal apparatus 400 performs disable processing of USIM information stored in the USIM information storage unit 350 of the second wireless terminal apparatus 400 (414). Accordingly, the USIM information held by the second wireless terminal apparatus 400 is disabled and the second wireless terminal apparatus 400 can no longer use the USIM information.

After the disable processing of the USIM information is finished (414), USIM information disable confirmation information indicating that disable processing of the USIM information is finished is transmitted from the second wireless terminal apparatus 400 to the authentication controller 210 of the network control apparatus 200 (415, 416).

When the USIM information disable confirmation information is received (416), the authentication controller 210 transmits USIM information enable information to enable USIM information of the wireless terminal apparatus having transmitted the USIM information transfer request to the first wireless terminal apparatus 300 (417, 418). When the USIM information enable information is received (418), the first wireless terminal apparatus 300 performs enable processing of USIM information stored in the USIM information storage unit 350 of the first wireless terminal apparatus 300 (419). Accordingly, the USIM information held by the first wireless terminal apparatus 300 is enabled and the first wireless terminal apparatus 300 can now use the USIM information.

After the enable processing of the USIM information is finished (419), USIM information enable confirmation information indicating that enable processing of the USIM information is finished is transmitted from the first wireless terminal apparatus 300 to the authentication controller 210 of the network control apparatus 200 (420, 421). When the USIM information enable confirmation information is received (421), the authentication controller 210 rewrites content of the wireless terminal apparatus management database 220. That is, content of the wireless terminal apparatus management database 220 is rewritten so that the first wireless terminal apparatus 300 is enabled and the second wireless terminal apparatus 400 is disabled.

Subsequently, USIM information transfer end information indicating that the transfer processing of USIM information is finished is transmitted from the authentication controller 210 of the network control apparatus 200 to the second wireless terminal apparatus 400 (422, 423). Similarly, USIM information transfer end information is transmitted from the authentication controller 210 of the network control apparatus 200 to the first wireless terminal apparatus 300 (424, 425).

In this example, an example in which the right of use of USIM information is transferred by performing enable/disable is shown, but the right of use of USIM information may be transferred by transferring USIM information itself. In this case, when a USIM information transfer request is transmitted to the second wireless terminal apparatus 400, the USIM information held by the second wireless terminal apparatus 400 is disabled (deleted) and transfer information is transmitted from the second wireless terminal apparatus 400 or the network control apparatus 200. Valid USIM information is set by causing the USIM information storage unit 350 to record USIM information contained in the transfer information.

In this example, an example in which one wireless terminal apparatus holds one piece of USIM information and the right of use of the USIM information is transferred by enabling/disabling the USIM information is shown. However, instead of establishing the above limited connection by causing each wireless terminal apparatus to hold USIM information to establish only a connection related to transfer processing of the right of use of USIM information, the connection related to transfer processing may be established by using the USIM information. For example, each wireless terminal apparatus is caused to hold first USIM information (for example, USIM information specific to connection control) to establish only a connection related to transfer processing of the right of use of USIM information. In this case, only the right of use of second USIM information (for example, USIM information to receive a desired service) to establish a connection capable of receiving the service desired by the user (for example, the video service). That is, when transfer processing of the right of use of the second USIM information is performed, the connection related to transfer processing of the right of use of the second USIM information is established by using the first USIM information. In the example shown in Fig. 8, for example, the first USIM information is held by both of the first wireless terminal apparatus 300 and the second wireless terminal apparatus 400. The right of use of the second USIM information is transferred by enable/disable control by the authentication controller 210 of the network control apparatus 200.

In this example, an example in which a wireless terminal apparatus having no right of use of USIM information makes a USIM information transfer request is shown, but a wireless terminal apparatus having the right of use of USIM information may make a USIM information transfer request. The USIM information transfer request in this case is a request to transfer USIM information to the wireless terminal apparatus of the other party. Also in this case, various kinds of information related to transfer processing can be transmitted to the wireless terminal apparatus of the other party having no right of use of USIM information by a limited connection.

### [Operation example of the communication system]

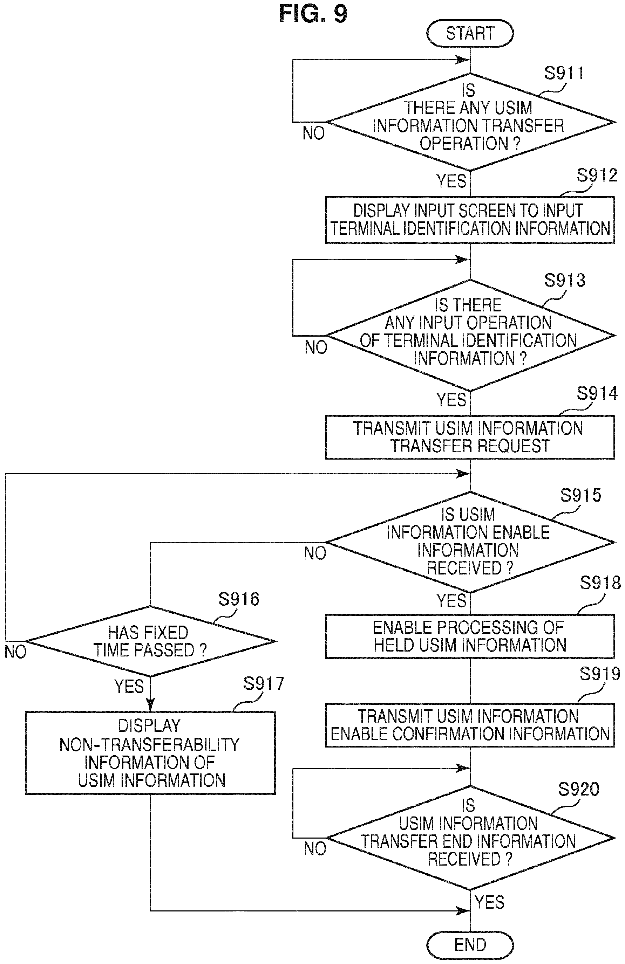

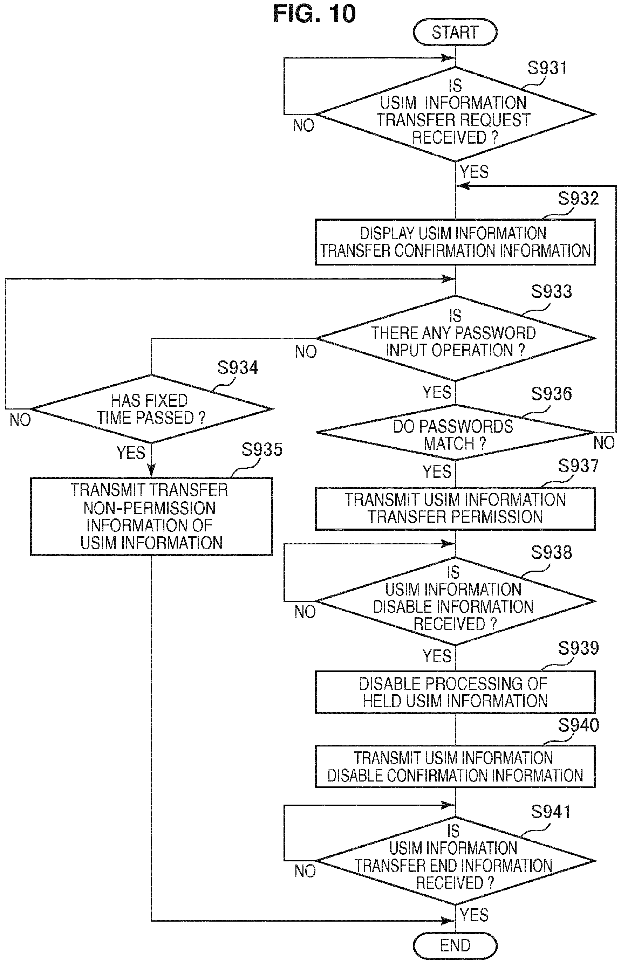

Next, the operation of the communication system 100 according to the first embodiment of the present disclosure will be described with reference to the drawings. In Figs. 9 and 10, only communication processing examples between the first wireless terminal apparatus 300 and the second wireless terminal apparatus 400 are shown, but the first embodiment can similarly be applied to operations between other wireless terminal apparatuses.

### [Operation example of the wireless terminal apparatus (transfer destination of the right of use of USIM information)]

Fig. 9 is a flow chart showing an example of the processing procedure of communication processing by the first wireless terminal apparatus 300 according to the first embodiment of the present disclosure. In Fig. 9, a case when the first wireless terminal apparatus 300 is the transfer destination of the right of use of USIM information is taken as an example. Fig. 9 also shows an example in which both of the first wireless terminal apparatus 300 and the second wireless terminal apparatus 400 hold USIM information and the right of use of USIM information is transferred by enable/disable control by the authentication controller 210 of the network control apparatus 200.

First, the control unit 330 determines whether a USIM information transfer operation is performed (step S911) and if no USIM information transfer operation is performed, monitoring is continued.

If a USIM information transfer operation is performed (step S911), the control unit 330 causes the display unit 370 to display the display screen to input terminal identification information of the wireless terminal apparatus of the transfer source (transfer request destination) from which the right of use of USIM information is transferred (step S912). Subsequently, the control unit 330 determines whether terminal identification information of the wireless terminal apparatus of the transfer request destination is input on the display screen (step S913) and if no input operation thereof is performed, monitoring is continued.

If terminal identification information of the wireless terminal apparatus of the transfer request destination is input (step S913), the control unit 330 transmits a USIM information transfer request containing the input terminal identification information to the authentication controller 210 of the network control apparatus 200 (step S914). The USIM information transfer request is made through the above limited connection.

Subsequently, the control unit 330 determines whether USIM information enable information to enable USIM information stored in the USIM information storage unit 350 is received (step S915). If no USIM information enable information is received (step S915), the control unit 330 determines whether a fixed time has passed after the transmission of the USIM information transfer request (step S916). If the fixed time has not passed after the transmission of the USIM information transfer request (step S916), the control unit 330 returns to step S915. On the other hand, if the fixed time has passed after the transmission of the USIM information transfer request (step S916), the control unit 330 causes the display unit 370 to display non-transferability information to notify that the right of use of USIM information cannot be transferred (step S917) before terminating the operation of communication processing. Incidentally, the step S915 is an example of a reception procedure described in claims.

When USIM information enable information is received (step S915), the control unit 330 performs enable processing of USIM information stored in the USIM information storage unit 350 (step S918). Accordingly, the USIM information stored in the USIM information storage unit 350 is enabled and the first wireless terminal apparatus 300 can now use the USIM information. Incidentally, the step S918 is an example of a control procedure described in claims.

Subsequently, the control unit 330 transmits USIM information enable confirmation information indicating that the enable processing of USIM information has finished to the authentication controller 210 of the network control apparatus 200 (step S919). Subsequently, the control unit 330 determines whether USIM information transfer end information indicating that the transfer processing of USIM information has finished is received (step S920) and if no USIM information transfer end information is received, monitoring is continued. If the USIM information transfer end information is received (step S920), the operation of communication processing is terminated.

### [Operation example of the wireless terminal apparatus (transfer source of the right of use of USIM information)]

Fig. 10 is a flow chart showing an example of the processing procedure of communication processing by the second wireless terminal apparatus 400 according to the first embodiment of the present disclosure. In Fig. 10, a case when the second wireless terminal apparatus 400 is the transfer source of the right of use of USIM information is taken as an example. Fig. 10 also shows an example in which both of the first wireless terminal apparatus 300 and the second wireless terminal apparatus 400 hold USIM information and the right of use of USIM information is transferred by enable/disable control by the authentication controller 210 of the network control apparatus 200.

First, the control unit 330 determines whether a USIM information transfer request is received (step S931) and if no USIM information transfer request is received, monitoring is continued.

If a USIM information transfer request is received (step S931), the control unit 330 causes the display unit 370 to display the display screen to allow the user to confirm the transfer of the right of use of USIM information (step S932). After the transfer is confirmed via the display screen, the control unit 330 causes the display unit 370 to display the display screen (password input screen) to input the password used when the right of use of USIM information is transferred (step S932).

Subsequently, the control unit 330 determines whether an input operation of the password is performed on the password input screen (step S933). If no input operation of the password is performed (step S933), the control unit 330 determines whether a fixed time has passed after the password input screen is displayed (step S934). If the fixed time has not passed after the password input screen is displayed (step S934), the control unit 330 returns to step S933. On the other hand, if the fixed time has passed after the password input screen is displayed (step S934), the control unit 330 transmits non-transferability information to notify that the right of use of USIM information cannot be transferred to the authentication controller 210 (step S935) before terminating the operation of communication processing.

If an input operation of the password is performed (step S933), the control unit 330 determines whether the input password matches the registered password (step S936). That is, authentication processing of the password is performed. If the input password does not match the registered password (step S936), the control unit 330 returns to step S932 to cause the display unit 370 to display the display screen prompting for input of the correct password.

If the input password matches the registered password (step S936), the control unit 330 transmits USIM information transfer permission that permits the transfer of the right of use of USIM information to the authentication controller 210 (step S937).

Subsequently, the control unit 330 determines whether USIM information disable information to disable USIM information stored in the USIM information storage unit 350 is received (step S938) and if no USIM information disable information is received, monitoring is continued. On the other hand, if the USIM information disable information is received (step S938), the control unit 330 performs disable processing of the USIM information stored in the USIM information storage unit 350 (step S939). Accordingly, the USIM information stored in the USIM information storage unit 350 is disabled and the second wireless terminal apparatus 400 can no longer use the USIM information.

Subsequently, the control unit 330 transmits USIM information disable confirmation information indicating that disable processing of the USIM information is finished to the authentication controller 210 of the network control apparatus 200 (step S940). Subsequently, the control unit 330 determines whether USIM information transfer end information indicating that the transfer processing of USIM information has finished is received (step S941) and if no USIM information transfer end information is received, monitoring is continued. If the USIM information transfer end information is received (step S941), the operation of communication processing is terminated.

### [Configuration example of the wireless terminal apparatus management database]

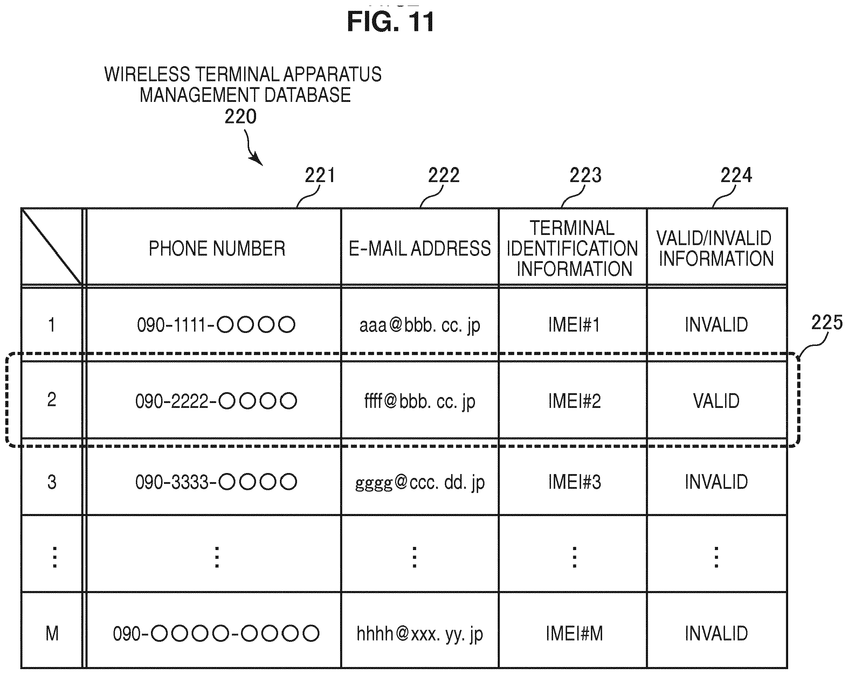

In the foregoing, examples in which the right of use of USIM information is transferred among three wireless terminal apparatuses have been shown. However, the first embodiment of the present disclosure can also be applied when the right of use of USIM information is transferred among two or four wireless terminal apparatuses or more. Fig. 11 shows a content example of the wireless terminal apparatus management database 220 when the right of use of USIM information is transferred among four wireless terminal apparatuses or more.

Fig. 11 is a diagram schematically showing the wireless terminal apparatus management database 220 according to a modification of the first embodiment of the present disclosure.

The wireless terminal apparatus management database 220 shown in Fig. 11 is substantially the same as Fig. 4 except that the number of wireless terminal apparatuses to be managed is four or more.

When, for example, one user owns M (M≥4) wireless terminal apparatuses, it is possible to enable only USIM information of one wireless terminal apparatus of the M wireless terminal apparatuses and disable USIM information of the other wireless terminal apparatuses. In this case, "Valid" is stored in one field of the valid/invalid information 224 of the wireless terminal apparatus management database 220 shown in Fig. 11 and "Invalid" is stored in the other fields.

Also when, for example, one user owns M (M≥3) wireless terminal apparatuses, it is possible to enable USIM information of N (1<N<M) wireless terminal apparatuses of the M wireless terminal apparatuses and disable USIM information of the other wireless terminal apparatuses. In this case, "Valid" is stored in N fields of the valid/invalid information 224 of the wireless terminal apparatus management database 220 shown in Fig. 11 and "Invalid" is stored in the other fields.

In the first embodiment of the present disclosure, examples in which when one user owns a plurality of wireless terminal apparatuses, the right of use of USIM information is transferred among these wireless terminal apparatuses have been shown. However, the first embodiment of the present disclosure can also be applied when the right of use of USIM information is transferred among wireless terminal apparatuses owned by a plurality of users (a plurality of wireless terminal apparatuses). For example, a group (for example, a group of five persons) in which one user owns one wireless terminal apparatus is assumed. In this case, it is possible to enable only USIM information of the wireless terminal apparatuses of two persons and disable USIM information of the wireless terminal apparatuses of the other three persons. In this case, transfer processing can be performed among members registered as a group after registering the group with the wireless terminal apparatus management database 220 shown in Fig. 11. When transfer processing is performed among members as described above, it is necessary to conclude as many contracts with the wireless operator as the number of pieces of USIM information that can be transferred among the members.

Thus, in the first embodiment of the present disclosure, a receiving unit (for example, the antenna 311, the antenna shared unit 312, and the demodulation unit 322) receives setting information (for example, USIM information enable information). The control unit 330 also sets the right of network connection (right of use of USIM information) to connect to a specific network via a wireless line based on the received setting information. That is, each of the plurality of wireless terminal apparatuses sets the right of network connection based on the control of the network control apparatus 200.

The communication system 100 is a communication system in which the right of network connection to connect to a predetermined network via a wireless line is shared among a plurality of wireless terminal apparatuses.

The right of network connection is a right to allow a plurality of network connected states in which service content provided via a network (for example, the public network 110) after connection to the network is established is different from each other. For example, a first network connected state is a connected state (for example, a limited connected state) to change the right of network connection. A second network connected state is a connected state (for example, a connected state based on valid USIM information) in which the provision of a desired service can be received via a network after connection is established to the network. Then, the control unit 330 sets the right of network connection based on setting information to allow each wireless terminal apparatus to enter at least one of the plurality of network connected states. For example, one wireless terminal apparatus constituting a plurality of wireless terminal apparatuses is allowed to enter the first network connected state or the second network connected state and the other wireless terminal apparatuses are allowed to enter only the first network connected state. The first embodiment of the present disclosure can also be applied when the number of network connected states is three or more.

The right of network connection is constituted of a plurality of rights of network connection in which service content provided via a network (for example, the public network 110) after connection to the network is established is different from each other. For example, a first right of network connection is a right of connection (for example, a right to establish a limited connection) to change the right of network connection. A second right of network connection is a right of connection (for example, a right to use valid USIM information) allowing the provision of a desired service via a network after connection is established to the network. Then, the control unit 330 sets at least one of the plurality of rights of network connection based on setting information. For example, one wireless terminal apparatus constituting a plurality of wireless terminal apparatuses has the first right of network connection and the second right of network connection set thereto and the other wireless terminal apparatuses have only the first right of network connection set thereto. The first embodiment of the present disclosure can also be applied when three rights of network connection or more are set.

The wireless terminal apparatus management database 220 is a database that manages rights of network connection and also associates and holds a plurality of wireless terminal apparatuses and types (for example, valid/invalid) of network connected states of each of these wireless terminal apparatuses. When rewrite information (for example, a USIM information transfer request) based on a user operation is received, the authentication controller 210 rewrites content of the wireless terminal apparatus management database 220 based on the rewrite information. Then, the authentication controller 210 exercises control to set the right of network connection to at least one of the plurality of wireless terminal apparatuses to conform to rewritten content.

In addition, the authentication controller 210 can exercise control to set whether to execute the wireless connection service for each of a plurality of wireless terminal apparatuses based on content of the wireless terminal apparatus management database 220. For example, whether to execute the wireless connection service desired by the user can be set based on the valid/invalid information 224. For example, when the valid/invalid information 224 is "valid", the wireless connection service desired by the user (for example, the video service) is set to execute and when the valid/invalid information 224 is "invalid", the wireless connection service desired by the user is set to not execute.

In recent years, individuals who own a plurality of wireless terminal apparatuses are increasing. When a user who as an individual owns a plurality of wireless terminal apparatuses uses each wireless terminal apparatus, a case when, for example, a UICC card is inserted into each of the wireless terminal apparatuses to be used can be considered. Alternatively, a case when one UICC card is shared among a plurality of wireless terminal apparatuses can be considered.

However, when a UICC card is inserted into each of the wireless terminal apparatuses to be used, the cost needed for the wireless connection service increases for increased UICC cards. When one UICC card is shared among a plurality of wireless terminal apparatuses, it is necessary to replace the UICC card among the wireless terminal apparatuses each time the wireless terminal apparatus to be used is changed. In this case, the replacement work is complicated. Also when one UICC card is shared among a plurality of wireless terminal apparatuses, the wireless terminal apparatus into which the UICC card is inserted may not be present by the user. In such a case, the wireless terminal apparatus to be used cannot be changed so that the desired function may not be available.

Thus, according to the first embodiment of the present disclosure, transfer processing of valid USIM information (contract authentication information) among plurality of wireless terminal apparatuses can easily be performed only by a simple user operation. Therefore, even if a plurality of wireless terminal apparatuses is owned by an individual, the plurality of wireless terminal apparatuses can easily be used without concluding a plurality of wireless connection services. In addition, even if a plurality of wireless terminal apparatuses is used, there is no need to replace the UICC card among the wireless terminal apparatuses. Accordingly, USIM information (contract authentication information) can easily be shared among the plurality of wireless terminal apparatuses. That is, the right to connect to a network (right of network connection) can easily be shared among the plurality of wireless terminal apparatuses.

### <2. Second embodiment>

In the first embodiment of the present disclosure, examples of transferring the right of use of USIM information among a plurality of wireless terminal apparatuses operable by the user have been shown. However, as shown in Fig. 1(b), a case when wireless terminal apparatuses (the second wireless terminal apparatus 400, the third wireless terminal apparatus 800) holding valid USIM information cannot be operated by the user can also be assumed. Thus, in the second (exemplary) embodiment of the present disclosure, an example of transferring the right of use of USIM information when a wireless terminal apparatus holding valid USIM information cannot be operated by the user is shown. The configuration of a communication system according to the second embodiment of the present disclosure is substantially the same as the example shown in Fig. 1 or the like. Thus, the same reference numerals are attached to elements common to the first embodiment of the present disclosure and the description thereof is partially omitted.

### [Communication example between each apparatus]

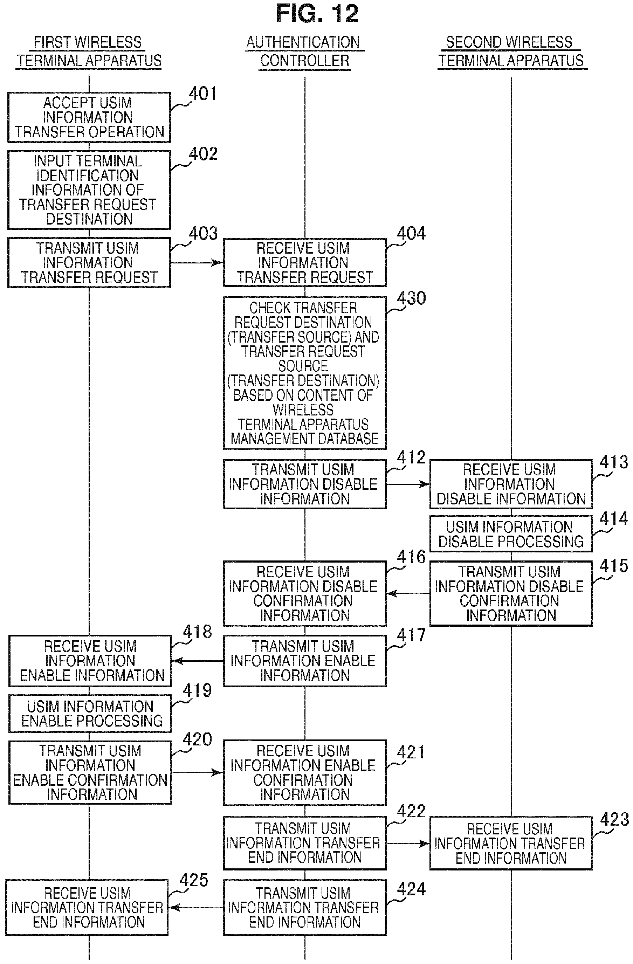

Fig. 12 is a sequence chart showing the communication processing between each apparatus constituting the communication system 100 according to the second embodiment of the present disclosure. The sequence chart shown in Fig. 12 is a modification of the sequence chart shown in Fig. 8 and thus, the same reference numerals are attached to elements common to Fig. 8 and the description thereof is partially omitted.

When a USIM information transfer request is received (404), the authentication controller 210 checks wireless terminal apparatuses of the transfer request destination (transfer source) and the transfer request source (transfer destination) based on content of the wireless terminal apparatus management database 220 (430). That is, the authentication controller 210 checks wireless terminal apparatuses of the transfer request destination (transfer source) and the transfer request source (transfer destination) identified from terminal identification information contained in the received USIM information transfer request.

Subsequently, after the wireless terminal apparatuses are checked, the authentication controller 210 transmits USIM information disable information to disable USIM information of the transfer request destination (transfer source) to the transfer request destination (transfer source) (second wireless terminal apparatus 400) (412, 413).

In this example, an example in which when USIM information disable information is received from the second wireless terminal apparatus 400 (416), the authentication controller 210 transmits the USIM information disable information to the first wireless terminal apparatus 300 (417) is shown. However, a case in which the power of the wireless terminal apparatus of the transfer request destination (transfer source) is turned off or the wireless terminal apparatus of the transfer request destination (transfer source) is out of range can also be assumed. Thus, even if, for example, USIM information disable confirmation information from the wireless terminal apparatus of the transfer request destination (transfer source) is not received, USIM information enable information may be transmitted to the wireless terminal apparatus of the transfer request source (transfer destination) if certain conditions are met. As certain conditions, for example, such conditions are set in advance by the user of the transfer request destination (transfer source) and no USIM information disable configuration information is received from the transfer request destination (transfer source) after a fixed time passes can be assumed.

However, if USIM information enable information is transmitted to the transfer request source (transfer destination) when no USIM information disable confirmation information is received from the transfer request destination (transfer source), USIM information of both the transfer request source (transfer destination) and the transfer request destination (transfer source) becomes valid. If, in such a case, the wireless terminal apparatus of the transfer request destination (transfer source) is turned on or is in range, access from the wireless terminal apparatus of the transfer request destination (transfer source) to a base station will be permitted. Thus, when no USIM information disable confirmation information is received from the transfer request destination (transfer source) and certain conditions are met, the authentication controller 210 rewrites content of the wireless terminal apparatus management database 220. That is, the authentication controller 210 rewrites content of the wireless terminal apparatus management database 220 in such a way that the transfer request source (transfer destination) is enabled and the transfer request destination (transfer source) is disabled. In addition, the authentication controller 210 causes each base station to hold information (disable information) indicating that the transfer request destination (transfer source) is disabled. If each base station is caused to hold the disable information and a base station is accessed by the wireless terminal apparatus of the transfer request destination (transfer source), the base station is caused to transmit USIM information disable information to the wireless terminal apparatus of the transfer request destination (transfer source). Therefore, content of the wireless terminal apparatus management database 220 is rewritten and each base station is caused to hold disable information before the authentication controller 210 transmits USIM information enable information to the transfer request source (transfer destination).

For example, in the example shown in Fig. 12, if no USIM information disable confirmation information is received from the second wireless terminal apparatus 400 and certain conditions are met, the authentication controller 210 rewrites content of the wireless terminal apparatus management database 220. That is, the authentication controller 210 rewrites content of the wireless terminal apparatus management database 220 in such a way that the first wireless terminal apparatus 300 is enabled and the second wireless terminal apparatus 400 is disabled. In addition, the authentication controller 210 causes the base stations 230, 240 to hold information (disable information) indicating that the second wireless terminal apparatus 400 is disabled. When one of the base stations 230, 240 is accessed by the second wireless terminal apparatus 400 while the base stations 230, 240 are caused to hold the disable information, the base station is made to transmit USIM information disable information to the second wireless terminal apparatus 400. Therefore, content of the wireless terminal apparatus management database 220 is rewritten and the base stations 230, 240 are caused to hold disable information before the authentication controller 210 transmits USIM information enable information to the first wireless terminal apparatus 300.

In the second embodiment of the present disclosure, as described above, if USIM information (contract authentication information) is shared among a plurality of wireless terminal apparatuses, there is no need to carry the wireless terminal apparatus holding the USIM information (contract authentication information). For example, even a user who has left his (her) wireless terminal apparatus (for example, his (her) mobile phone apparatus) in his (her) house can borrow a wireless terminal apparatus on his (her) trip to use the apparatus like his (her) wireless terminal apparatus. Accordingly, USIM information (contract authentication information) can more easily be shared among the plurality of wireless terminal apparatuses.

### <3. Third embodiment>

In the first and second embodiments of the present disclosure, examples of transferring USIM information (or the right of use thereof) related to one wireless operator have been described. However, a case when USIM information related to a plurality of wireless operators is shared among a plurality of wireless terminal apparatuses can also be assumed. Thus, in the third (exemplary) embodiment of the present disclosure, an example in which USIM information related to a plurality of wireless operators is shared among a plurality of wireless terminal apparatuses is shown. The configuration of a communication system according to the third embodiment of the present disclosure partially has elements common to the example shown in Fig. 2 or the like and thus, the same reference numerals are attached to elements common to the first embodiment of the present disclosure and the description thereof is partially omitted.

### [Configuration example of the communication system]

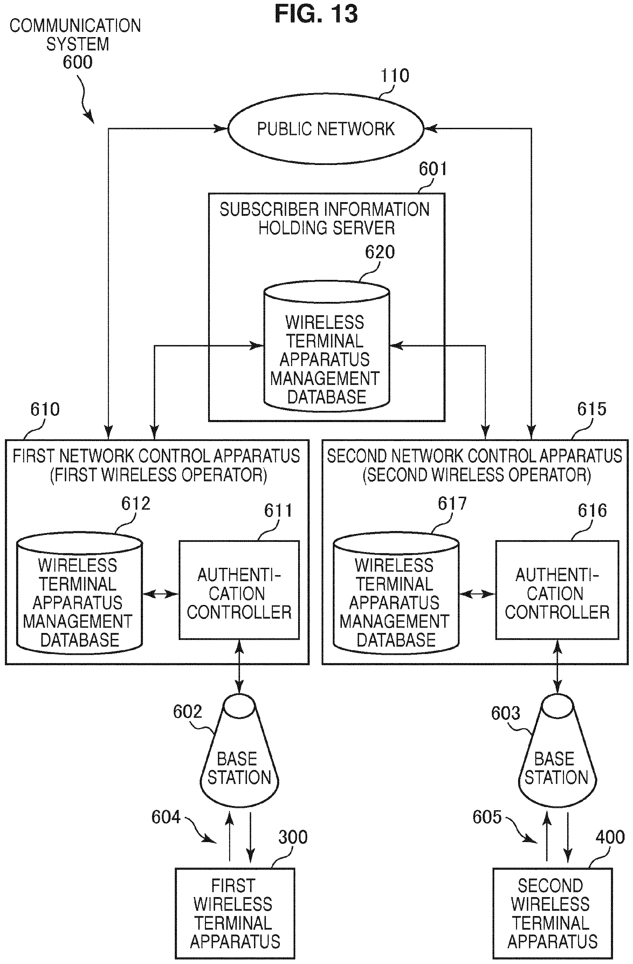

Fig. 13 is a block diagram showing a system configuration example of the communication system 600 according to the third embodiment of the present disclosure.

The communication system 600 includes the public network 110, a subscriber information holding server 601, a first network control apparatus 610, the base stations 230, 240, the first wireless terminal apparatus 300, and the second wireless terminal apparatus 400. The public network 110, the first network control apparatus 610, and a second network control apparatus 615 are connected via a gateway (not shown).

Base stations 602, 603 are mobile communication base stations (NodeB) that connect the first wireless terminal apparatus 300 and the second wireless terminal apparatus 400 to the first network control apparatus 610 and the second network control apparatus 615 via wireless lines 604, 605 respectively.

The first network control apparatus 610 is a communication control apparatus managed by a first wireless operator providing wireless connection services and includes an authentication controller 611 and a wireless terminal apparatus management database 612. The second network control apparatus 615 is a communication control apparatus managed by a second wireless operator (who is different from the first wireless operator) providing wireless connection services and includes an authentication controller 616 and a wireless terminal apparatus management database 617.

The first network control apparatus 610 and the second network control apparatus 615 correspond to the network control apparatus 200 shown in Fig. 2. The authentication controllers 611, 616 correspond to the authentication controller 210 shown in Fig. 2 and the wireless terminal apparatus management databases 612, 617 correspond to the wireless terminal apparatus management database 220 shown in Fig. 2.

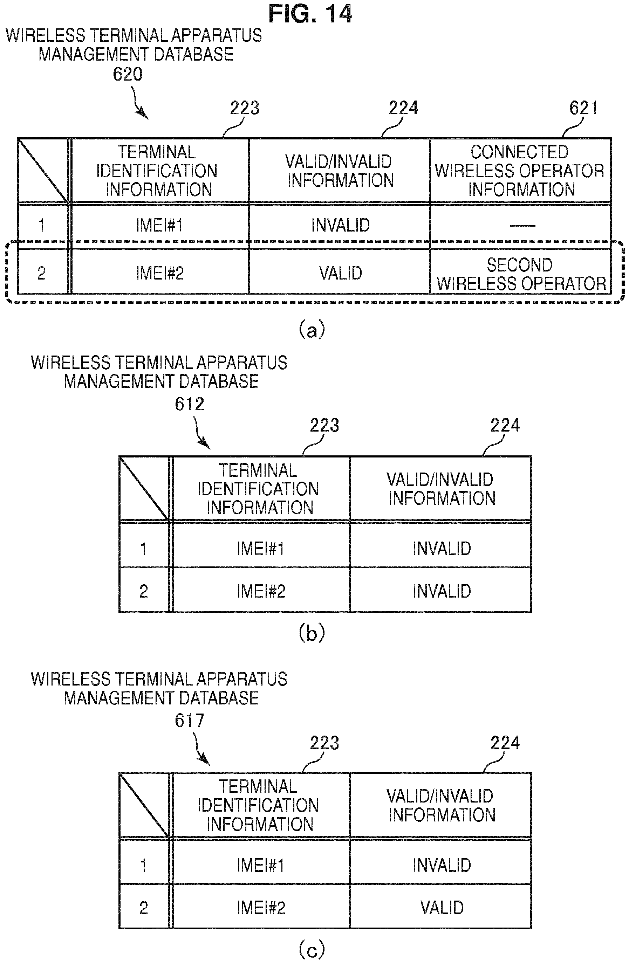

The subscriber information holding server 601 is a server holding subscriber information and includes a wireless terminal apparatus management database 620. The wireless terminal apparatus management database 620 is a database to manage information about subscribers owning a wireless terminal apparatus. The wireless terminal apparatus management database 620 will be described in detail with reference to Fig. 14 or the like.

### [Configuration example of the wireless terminal apparatus management database]

Fig. 14 is a diagram schematically showing each wireless terminal apparatus management database according to the third embodiment of the present disclosure.

Fig. 14(a) shows the wireless terminal apparatus management database 620 included in the subscriber information holding server 601. Fig. 14(b) shows the wireless terminal apparatus management database 612 included in the first network control apparatus 610 and Fig. 14(c) shows the wireless terminal apparatus management database 617 included in the second network control apparatus 615. The terminal identification information 223 and the valid/invalid information 224 in each wireless terminal apparatus management database correspond to the terminal identification information 223 and the valid/invalid information 224 shown in Fig. 4.

The wireless terminal apparatus management database 620 is a database that manages USIM information held by each of the first wireless terminal apparatus 300 and the second wireless terminal apparatus 400. More specifically, the terminal identification information 223, the valid/invalid information 224, and wireless connection operator information 621 are associated and recorded in the wireless terminal apparatus management database 620.

Information (wireless connection operator information) about wireless operators to which a wireless terminal apparatus holding valid USIM information can be connected is stored in the wireless connection operator information 621. In Fig. 14, the name (second wireless operator) of the wireless operator is shown as information about the wireless connection operator information to simplify the description. In addition, each piece of information about wireless terminal apparatuses whose USIM information is valid by enclosing such information with a thick rectangle.

### [Communication example between each apparatus]

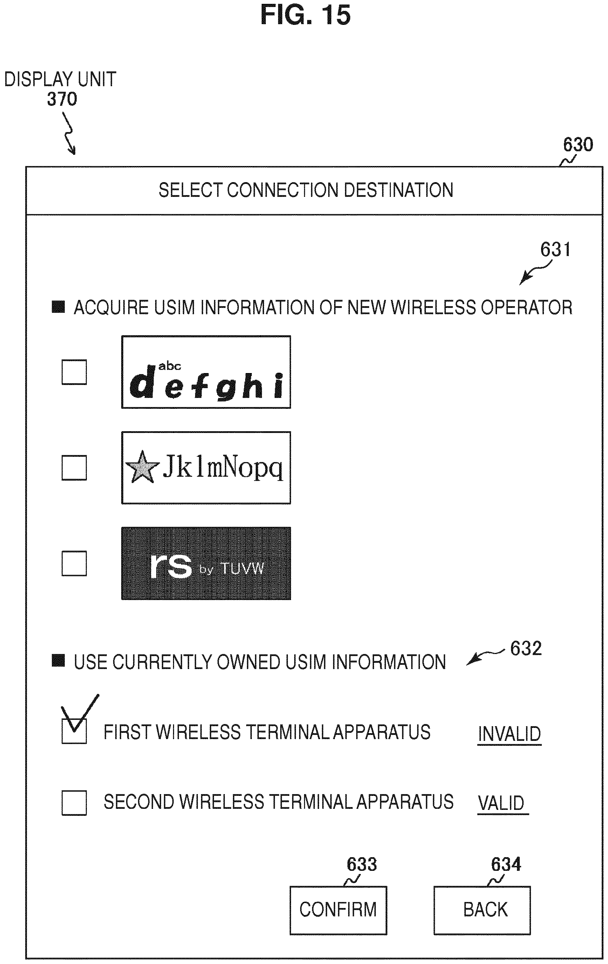

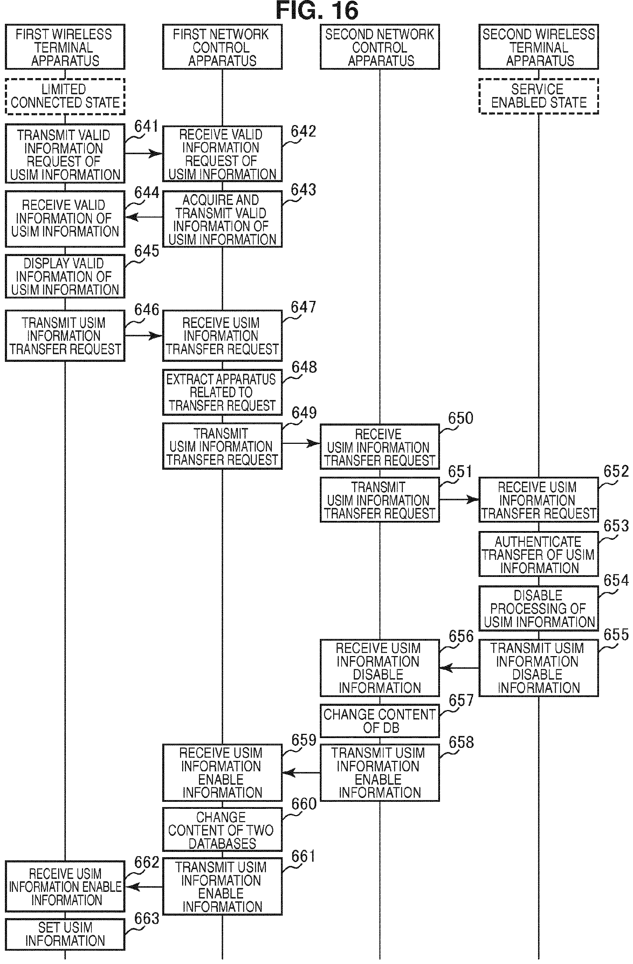

Fig. 15 is a diagram showing a display screen example displayed in the first wireless terminal apparatus 300 and the second wireless terminal apparatus 400 according to the third embodiment of the present disclosure. The display screen will be described in detail with reference to the sequence chart shown in Fig. 16.

Fig. 16 is a sequence chart showing a communication processing example between each apparatus constituting the communication system 600 according to the third embodiment of the present disclosure.

Fig. 16 shows an example in which both of the first wireless terminal apparatus 300 and the second wireless terminal apparatus 400 have USIM information (first and second wireless operators) and the right of use of the USIM information is transferred based on content of the wireless terminal apparatus management database 620. Also in Fig. 16, communication processing when the first wireless terminal apparatus 300 makes a transfer request to the second wireless terminal apparatus 400 when the second wireless terminal apparatus 400 holds valid USIM information is taken as an example.

First, operation input to request valid information of USIM information is done. In this case, a valid information request of USIM information to request valid information of USIM information is transmitted from the first wireless terminal apparatus 300 to the first network control apparatus 610 (641). The valid information request of USIM information is transmitted from the first wireless terminal apparatus 300 to the first network control apparatus 610 via the above limited connection.

When the valid information request of USIM information is received (642), the first network control apparatus 610 acquires content (valid information of USIM information) of the wireless terminal apparatus management database 620 of the subscriber information holding server 601 and transmits the content to the first wireless terminal apparatus 300 (643). When the first wireless terminal apparatus 300 receives valid information of USIM information (644), a display screen containing the valid information of USIM information is displayed in the display unit 370 of the first wireless terminal apparatus 300 (645).

Fig. 15 shows an example (display screen 630) of the display screen containing valid information of USIM information. The display screen 630 is a display screen for the first wireless terminal apparatus 300 to acquire valid USIM information. More specifically, the display screen 630 is provided with a wireless operator list display area 631, a valid information display area of USIM information 632, a confirm button 633, and a back button 634.

In the wireless operator list display area 631, wireless operators connectible from the position where the first wireless terminal apparatus 300 is located are listed. That is, when USIM information of a new wireless operator should be acquired, the check field (shown as a hollow rectangle) thereof in the wireless operator list display area 631 is checked.

In the valid information display area of USIM information 632, valid information of USIM information corresponding to content of the wireless terminal apparatus management database 620 of the subscriber information holding server 601 is displayed. That is, when valid USIM information should be transferred, the check field (shown as a hollow rectangle) to be the transfer destination (that is, the first wireless terminal apparatus 300) is checked.

The confirm button 633 is a button pressed when, after any check field of the wireless operator list display area 631 or the valid information display area of USIM information 632 is checked, the operation is confirmed.

The back button 634 is a button pressed to return to, for example, the display screen displayed immediately before.

In the display screen 630 shown in Fig. 15, the confirm button 633 is assumed to be pressed after the check field of the first wireless terminal apparatus 300 in the valid information display area of USIM information 632 is checked (646). If the USIM information transfer operation is accepted as described above (646), a USIM information transfer request containing terminal identification information of the checked transfer request destination (transfer source) is transmitted from the first wireless terminal apparatus 300 to the first network control apparatus 610 (646, 647). The USIM information transfer request contains terminal identification information of the transfer request source (transfer destination) together with terminal identification information of the transfer request destination (transfer source). The USIM information transfer request is transmitted from the first wireless terminal apparatus 300 to the first network control apparatus 610 via the above limited connection.

When the USIM information transfer request is received (647), the first network control apparatus 610 extracts the wireless terminal apparatus (second wireless terminal apparatus 400) of the transfer request destination (transfer source) from the wireless terminal apparatus management database 620 (648). In this case, the transfer request destination (transfer source) is extracted based on terminal identification information contained in the received USIM information transfer request. In addition, the wireless operator (that is, the second wireless operator) to which the wireless terminal apparatus (second wireless terminal apparatus 400) of the extracted transfer request destination (transfer source) is connected is identified (648).

Subsequently, the first network control apparatus 610 transmits a USIM information transfer request to the network control apparatus (second network control apparatus 615) of the wireless operator (second wireless operator) to which the extracted transfer request destination (transfer source) is connected (649).

Subsequently, the second network control apparatus 615 receives a USIM information transfer request (650). After the reception of the request, the second network control apparatus 615 checks whether the wireless terminal apparatus identified based on terminal identification information contained in the USIM information transfer request holds valid USIM information by using the wireless terminal apparatus management database 617. Then, the second network control apparatus 615 transmits the USIM information transfer request (651).

When the USIM information transfer request is received by the second wireless terminal apparatus 400 (652), the control unit 330 of the second wireless terminal apparatus 400 performs authentication processing (653). Subsequently, the control unit 330 of the second wireless terminal apparatus 400 performs disable processing of USIM information stored in the USIM information storage unit 350 of the second wireless terminal apparatus 400 (654). Accordingly, the USIM information held by the second wireless terminal apparatus 400 is disabled and the second wireless terminal apparatus 400 can no longer use the USIM information.

After the disable processing of the USIM information is finished (654), USIM information disable confirmation information indicating that disable processing of the USIM information is finished is transmitted from the second wireless terminal apparatus 400 to the second network control apparatus 615 (655, 656).

When the USIM information disable confirmation information is received (656), the second network control apparatus 615 rewrites content of the wireless terminal apparatus management database 617 (657). That is, content of the wireless terminal apparatus management database 617 is rewritten so that the second wireless terminal apparatus 400 is disabled.

Subsequently, the second network control apparatus 615 transmits USIM information enable information to enable USIM information (first wireless operator) of the wireless terminal apparatus having transmitted the USIM information transfer request to the first network control apparatus 610 (658, 659).

Subsequently, when the USIM information enable information is received (659), the first network control apparatus 610 rewrites content of the wireless terminal apparatus management databases 620, 612 (660). That is, content of the wireless terminal apparatus management database 612 is rewritten so that the first wireless terminal apparatus 300 is enabled. Also, content of the wireless terminal apparatus management database 620 is rewritten so that the first wireless terminal apparatus 300 is enabled and the second wireless terminal apparatus 400 is disabled.

Subsequently, the first network control apparatus 610 transmits the USIM information enable information to enable USIM information of the first wireless operator to the first wireless terminal apparatus 300 (661, 662). When the USIM information enable information (transfer information) is received (662), the first wireless terminal apparatus 300 performs enable processing of USIM information (first wireless operator) stored in the USIM information storage unit 350 of the first wireless terminal apparatus 300 (663). Accordingly, the USIM information (first wireless operator) held by the first wireless terminal apparatus 300 is enabled and the first wireless terminal apparatus 300 can now use the USIM information (first wireless operator).

Thus, according to the third embodiment of the present disclosure, USIM information related to a plurality of wireless operators can be shared among a plurality of wireless terminal apparatuses. That is, when the second wireless terminal apparatus 400 connected to the second network control apparatus (second operator) 615 has valid USIM information, the valid USIM information can be transferred to the first wireless terminal apparatus 300. In this case, the second wireless terminal apparatus 400 connected to the second network control apparatus (second operator) 615 has valid USIM information of the second operator and valid USIM information of the first operator is transferred to the first wireless terminal apparatus 300.

While an example in which the wireless terminal apparatus management database 620 is included in the subscriber information holding server 601 is shown in the third embodiment of the present disclosure, any wireless operator may include the database. For example, the first network control apparatus 610 or the second network control apparatus 615 may include the database.

### <4. Fourth embodiment>

In the first to third embodiments of the present disclosure, examples in which transfer processing of the right of network connection (transfer processing of the right of use of USIM information) is performed by a network control apparatus by using a wireless terminal apparatus management database for each wireless terminal apparatus have been shown. However, a case when an apparatus (for example, a subscriber information holding server) other than the network control apparatus performs transfer processing of the right of network connection can also be assumed. Thus, in the fourth (exemplary) embodiment of the present disclosure, an example in which an apparatus other than the network control apparatus performs transfer processing of the right of network connection is shown. The configuration of a communication system according to the fourth embodiment of the present disclosure partially has elements common to the example shown in Fig. 2 or the like and thus, the same reference numerals are attached to elements common to the first to third embodiments of the present disclosure and the description thereof is partially omitted.

### [Configuration example of the communication system]

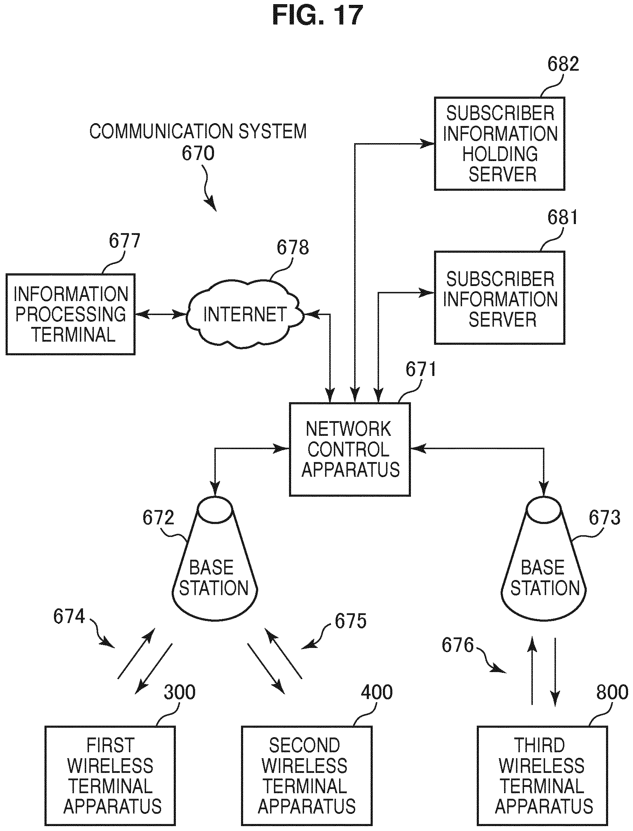

Fig. 17 is a block diagram showing a system configuration example of the communication system 670 according to the fourth embodiment of the present disclosure.

The communication system 670 includes a network control apparatus 671, base stations 672, 673, an information processing terminal 677, an internet 678, a subscriber information server 681, and a subscriber information holding server 682. The internet 678 and the network control apparatus 671 are connected via a gateway (not shown).

The base stations 672, 673 are mobile communication base stations (NodeB) that connect the first wireless terminal apparatus 300, the second wireless terminal apparatus 400, and the third wireless terminal apparatus 800 and the network control apparatus 671 via wireless lines 674 to 676.

The network control apparatus 671 is a communication control apparatus managed by a wireless operator providing wireless connection services and includes an authentication controller (not shown) and a wireless terminal apparatus management database (not shown). The network control apparatus 671 corresponds to the network control apparatus 200 shown in Fig. 2. The authentication controller corresponds to the authentication controller 210 shown in Fig. 2 and the wireless terminal apparatus management database corresponds to the wireless terminal apparatus management database 220 shown in Fig. 2.

The subscriber information server 681 is a server including a database (HLR (home location register)) that manages user information such as the phone number, terminal identification information and the like.

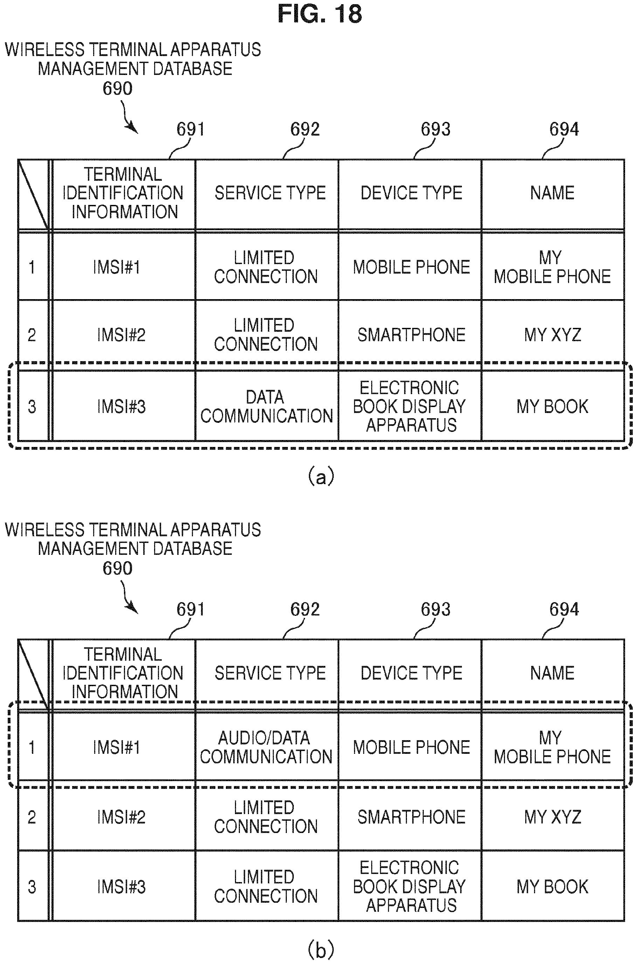

The subscriber information holding server 682 includes the wireless terminal apparatus management database 690 (shown in Fig. 18). The subscriber information holding server 682 corresponds to, for example, the subscriber information holding server 601 shown in Fig. 13. That is, in the fourth embodiment of the present disclosure, information (wireless terminal apparatus information) about a plurality of wireless terminal apparatuses sharing USIM information is held on the subscriber information holding server 682 connected to the network control apparatus 671. Then, wireless terminal apparatus information held on the subscriber information holding server 682 is changed to dynamically distinguish, among sharing wireless terminal apparatuses, between wireless terminal apparatuses actually used for service and wireless terminal apparatuses for which a network connection system or services for use are limited. In addition, USIM information of sharing wireless terminal apparatuses is changed based on wireless terminal apparatus information held on the subscriber information holding server 682 via a wireless line. Accordingly, one piece of USIM information (that is, one contract) can be shared by the plurality of wireless terminal apparatuses. The subscriber information holding server 682 is an example the information processing apparatus described in claims.

The information processing terminal 677 is an information processing apparatus (for example, a personal computer) capable of connecting to the internet 678 via a wire line or wireless line.

### [Configuration example of the wireless terminal apparatus management database]

Fig. 18 is a diagram schematically showing the wireless terminal apparatus management database 690 according to the fourth embodiment of the present disclosure. The subscriber information holding server 682 shown in Fig. 17 includes the wireless terminal apparatus management database 690.

The wireless terminal apparatus management database 690 is a database that manages USIM information held by each of the first wireless terminal apparatus 300, the second wireless terminal apparatus 400, and the third wireless terminal apparatus 800. More specifically, terminal identification information 691, a service type 692, a device type 693, and a name 694 are associated and recorded in the wireless terminal apparatus management database 690. The terminal identification information 691 corresponds to the terminal identification information 223 shown in Fig. 4.

The service state available for each wireless terminal apparatus sharing USIM information is stored in the service type 692. That is, wireless terminal apparatuses holding valid USIM information can be identified based on the service type 692. In Fig. 18, wireless terminal apparatuses holding no valid USIM information are denoted by "Limited connection" to simplify the description. In addition, each piece of information about wireless terminal apparatuses holding valid USIM information by enclosing such information with a thick rectangle. That is, in Fig. 18A, an example in which the wireless terminal apparatuses of IMSI#1, IMSI#2 are in a limited connected state and the wireless terminal apparatus of IMSI#3 is in a state in which a general public network service of data communication services is available is shown. In Fig. 18B, an example in which the wireless terminal apparatuses of IMSI#2, IMSI#3 are in a limited connected state and the wireless terminal apparatus of IMSI#1 is in a state in which a calling service and a general public network service of data communication services are available is shown.

The device type of each wireless terminal apparatus sharing USIM information is stored in the device type 693. The first wireless terminal apparatus 300 is assumed to be, for example, like in the first embodiment of the present disclosure, a mobile phone apparatus (for example, a mobile phone apparatus including a call function and a data communication function) and the second wireless terminal apparatus 400 is assumed to be a mobile phone apparatus (for example, a smartphone). Also, the third wireless terminal apparatus 800 is assumed to be an electronic book display apparatus. For example, the service state stored in the service type 692 can be identified based on the device type stored in the device type 693. When, for example, "Limited state" as the service state of the wireless terminal apparatus of IMSI#3 is rewritten, "Data communication" is stored in the service type 692 based on "Electronic book display apparatus" of the device type 693. When, for example, "Limited state" as the service state of the wireless terminal apparatus of IMSI#1 is rewritten, "Audio/data communication" is stored in the service type 692 based on "Mobile phone" of the device type 693. Then, for example, the subscriber information holding server 682 can exercise control to change the service state of each wireless terminal apparatus based on content of the service type 692.

A name (for example, a name accessible to the user) of each wireless terminal apparatus sharing USIM information is stored in the name 694. That is, a name that allows the user to identify each wireless terminal apparatus when each setting about the transfer of USIM information is made by the user is stored in the name 694. For example, the name of each wireless terminal apparatus may be stored in the name 694 by a user operation or the preset name may be stored.

Thus, the subscriber information holding server 682 shown in Fig. 17 uses IMSI (International Mobile Subscription Identify) managed by wireless operators to identify each wireless terminal apparatus. Then, the subscriber information holding server 682 holds the service state available for the wireless terminal apparatus corresponding to each IMSI.

Incidentally, the wireless terminal apparatus management database 690 may be included in HLR (see TS23.002).

### [Communication example between each apparatus (example of changing the service connected state by an apparatus in a limited connected state)]

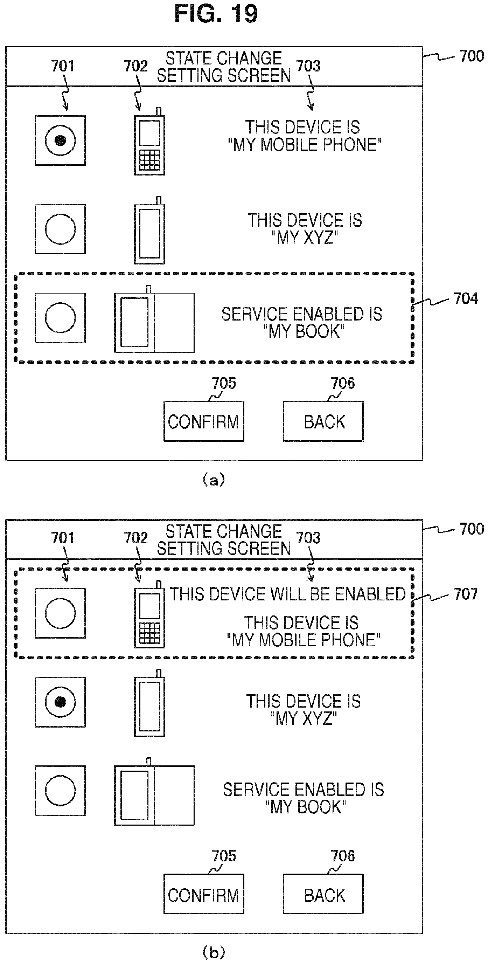

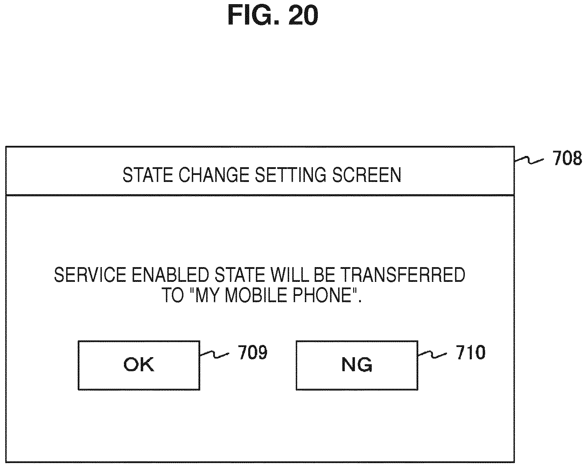

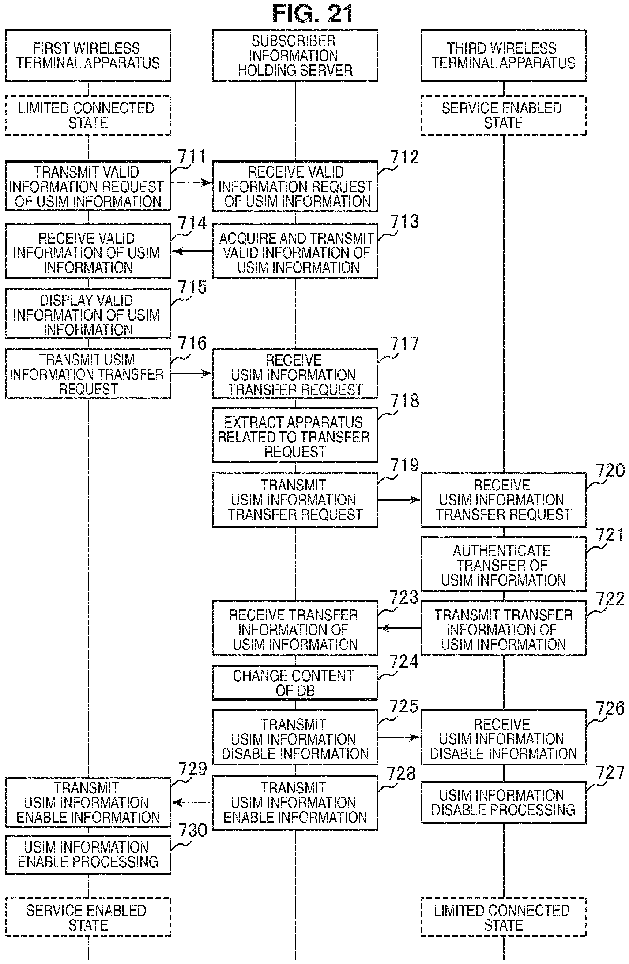

Figs. 19 and 20 are diagrams showing display screen examples displayed in the first wireless terminal apparatus 300 and the third wireless terminal apparatus 800 according to the fourth embodiment of the present disclosure. These display screens will be described in detail with reference to the sequence chart shown in Fig. 21.

Fig. 21 is a sequence chart showing a communication processing example between each apparatus constituting the communication system 670 according to the fourth embodiment of the present disclosure.

Fig. 21 shows an example in which both of the first wireless terminal apparatus 300 and the third wireless terminal apparatus 800 have USIM information and the right of use of the USIM information is transferred based on content of the wireless terminal apparatus management database 690. Also in Fig. 21, communication processing when the first wireless terminal apparatus 300 makes a transfer request to the third wireless terminal apparatus 800 when the third wireless terminal apparatus 800 holds valid USIM information is taken as an example. That is, Fig. 21 shows a communication processing example in which a wireless terminal apparatus (first wireless terminal apparatus 300) in a limited connected state is used and the wireless terminal apparatus (first wireless terminal apparatus 300) is changed to a service connected state.

First, operation input to request valid information (current state of the right of network connection) of USIM information is done. In this case, a valid information request of USIM information to request valid information of USIM information is transmitted from the first wireless terminal apparatus 300 to subscriber information holding server 682 via the network control apparatus 671 (711, 712). The valid information request of USIM information is transmitted from the first wireless terminal apparatus 300 to the network control apparatus 671 via the above limited connection.

When the valid information request of USIM information is received (712), the subscriber information holding server 682 acquires content (valid information of USIM information) of the wireless terminal apparatus management database 690. Then, the subscriber information holding server 682 transmits the content via the network control apparatus 671 of the first wireless terminal apparatus 300 (713). When the first wireless terminal apparatus 300 receives valid information of USIM information (714), a display screen containing the valid information of USIM information is displayed in the display unit 370 of the first wireless terminal apparatus 300 (715).

Fig. 19A shows an example (display screen 700) of the display screen containing valid information of USIM information. The display screen 700 is a display screen for the first wireless terminal apparatus 300 to acquire valid USIM information. More specifically, the display screen 700 is provided with a valid information display area of USIM information 701, a device icon display area 702, a device name display area 703, a confirm button 705, and a back button 706.

In the valid information display area of USIM information 701, valid information of USIM information corresponding to content (the service type 692 shown in Fig. 18) of the wireless terminal apparatus management database 690 of the subscriber information holding server 682 is displayed. In the valid information display area of USIM information 701, a black dot is added inside a hollow circle corresponding to a wireless terminal apparatus holding valid USIM information (that is, when the service type 692 shown in Fig. 18 is other than "Limited connection"). On the other hand, nothing is added to the hollow circle corresponding to a wireless terminal apparatus holding no valid USIM information (that is, when the service type 692 shown in Fig. 18 is "Limited connection"). When USIM information should be transferred, a black dot is added within the hollow circle of the transfer destination in the valid information display area of USIM information 701.

In the device icon display area 702, an icon indicating the type of the wireless terminal apparatus corresponding to content (the device type 693 shown in Fig. 18) of the wireless terminal apparatus management database 690 of the subscriber information holding server 682 is displayed.

In the device name display area 703, the name corresponding to content (the name 694 shown in Fig. 18) of the wireless terminal apparatus management database 690 of the subscriber information holding server 682 is displayed. For a wireless terminal apparatus holding valid USIM information, information to that effect is displayed.

In addition, each piece of information about a wireless terminal apparatus holding valid USIM information is enclosed with a dotted rectangle 704 so that the wireless terminal apparatus holding valid USIM information can easily be grasped.

The confirm button 705 is a button pressed when, after an operation to transfer USIM information is performed, the operation is confirmed in the display screen 700.

The back button 706 is a button pressed to return to, for example, the display screen displayed immediately before.

Fig. 19B shows an example (display screen 700) of the display screen when an operation to transfer USIM information is performed in the display screen 700 shown in Fig. 19A. When an operation to transfer USIM information is performed in the display screen 700, a black dot is added within the hollow circle of the transfer destination in the valid information display area of USIM information 701. In addition, each piece of information about the wireless terminal apparatus of the transfer destination is enclosed with a dotted rectangle 707 so that the operation thereof is easily be grasped.

It is assumed here that in the display screen 700 shown in Fig. 19A, the confirm button 705 is pressed after a black dot is added within the hollow circle of the transfer destination (first wireless terminal apparatus 300) in the valid information display area of USIM information 701 (716). If the USIM information transfer operation is accepted as described above (716), a USIM information transfer request is transmitted (716, 717). That is, a USIM information transfer request containing terminal identification information of the transfer request destination (transfer source) having a back dot added thereto is transmitted from the first wireless terminal apparatus 300 to the subscriber information holding server 682 via the network control apparatus 671 (716, 717). The USIM information transfer request contains terminal identification information of the transfer request source (transfer destination) together with terminal identification information of the transfer request destination (transfer source). The USIM information transfer request is transmitted from the first wireless terminal apparatus 300 to the network control apparatus 671 via the above limited connection.

When the USIM information transfer request is received (717), the subscriber information holding server 682 extracts the wireless terminal apparatus (third wireless terminal apparatus 800) of the transfer request destination (transfer source) from the wireless terminal apparatus management database 690 (718). In this case, the transfer request destination (transfer source) is extracted based on terminal identification information contained in the received USIM information transfer request.

Subsequently, the subscriber information holding server 682 transmits the USIM information transfer request to the extracted transfer request destination (transfer source) via the network control apparatus 671 (719).

When the third wireless terminal apparatus 800 receives the USIM information transfer request (720), the control unit 330 of the third wireless terminal apparatus 800 performs authentication processing (721). That is, a display screen to confirm the transfer of USIM information is displayed in the display unit 370 of the third wireless terminal apparatus 800 (721).

Fig. 20 shows an example (display screen 708) of the display screen to confirm the transfer of USIM information. The display screen 708 is a display screen to cause the user to confirm the transfer of valid USIM information held by the third wireless terminal apparatus 300. More specifically, the display screen 708 is provided with an OK button 709 and an NG 710.

The OK button 709 is a button pressed when the transfer of valid USIM information displayed in the display screen 708 is permitted. The NG button 710 is a button pressed when the transfer of valid USIM information displayed in the display screen 708 is rejected.

It is assumed here that in the display screen 708 shown in Fig. 20, the OK button 709 is pressed (721). If the USIM information transfer permission operation is accepted as described above (721), transfer information of USIM information is transmitted from the third wireless terminal apparatus 800 to the subscriber information holding server 682 via the network control apparatus 671 (722, 723).

When the transfer information of USIM information is received (723), the subscriber information holding server 682 rewrites content of the wireless terminal apparatus management database 690 (724). For example, as shown in Fig 18B, content of the wireless terminal apparatus management database 690 is rewritten so that the first wireless terminal apparatus 300 is enabled and the third wireless terminal apparatus 800 is disabled.

Subsequently, the subscriber information holding server 682 transmits USIM information disable information to disable USIM information of the wireless terminal apparatus having transmitted the transfer information of USIM information to the third wireless terminal apparatus 800 via the network control apparatus 671 (725, 726). When the third wireless terminal apparatus 800 received the USIM information disable information (726), the control unit 330 of the third wireless terminal apparatus 800 performs disable processing of USIM information stored in the USIM information storage unit 350 of the third wireless terminal apparatus 800 (727). Accordingly, the USIM information held by the third wireless terminal apparatus 800 is disabled and the third wireless terminal apparatus 800 can no longer use the USIM information.

In addition, the subscriber information holding server 682 transmits USIM information enable information to enable USIM information of the wireless terminal apparatus having transmitted the USIM information transfer request to the first wireless terminal apparatus 300 via the network control apparatus 671 (728, 729). When the first wireless terminal apparatus 300 receives the USIM information enable information (729), the control unit 330 of the first wireless terminal apparatus 300 performs enable processing of USIM information stored in the USIM information storage unit 350 of the first wireless terminal apparatus 300 (730). Accordingly, the USIM information held by the first wireless terminal apparatus 300 is enabled and the first wireless terminal apparatus 300 can now use the USIM information.

### [Communication example between each apparatus (example of changing the service connected state by an apparatus in a service connected state)]

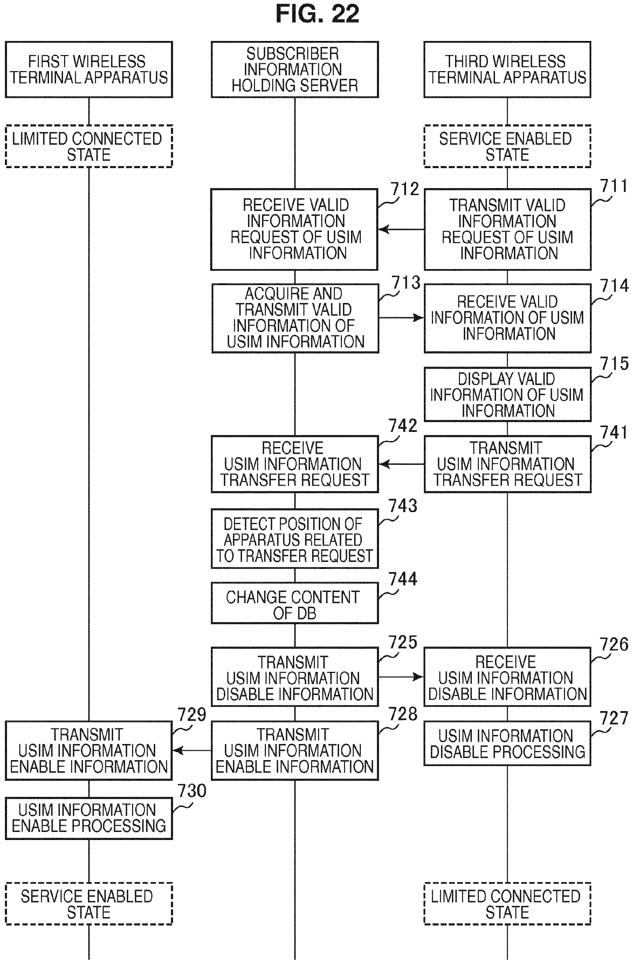

Fig. 21 shows an example in which a wireless terminal apparatus in a limited connected state is used and the wireless terminal apparatus is changed to a service connected state. However, as described above, a wireless terminal apparatus in a service connected state may be used to change another wireless terminal apparatus to the service connected state. Thus, Fig. 22 shows an example in which a wireless terminal apparatus in a service connected state is used to change another wireless terminal apparatus to the service connected state.

Fig. 22 is a sequence chart showing a communication processing example between each apparatus constituting the communication system 670 according to the fourth embodiment of the present disclosure.

Fig. 22 shows an example in which both of the first wireless terminal apparatus 300 and the third wireless terminal apparatus 800 have USIM information and the right of use of the USIM information is transferred based on content of the wireless terminal apparatus management database 690. Also in Fig. 22, communication processing when the third wireless terminal apparatus 800 makes a transfer request to the first wireless terminal apparatus 300 when the third wireless terminal apparatus 800 holds valid USIM information is taken as an example. That is, Fig. 22 shows a communication processing example in which a wireless terminal apparatus (third wireless terminal apparatus 800) in a service connected state is used to change another wireless terminal apparatus (first wireless terminal apparatus 300) to the service connected state. The communication processing example shown in Fig. 22 is a modification of Fig. 21 and thus, the same reference numerals are attached to elements common to Fig. 21 and the description thereof is partially omitted.

When the third wireless terminal apparatus 800 receives valid information of USIM information (714), a display screen containing the valid information of USIM information is displayed in the display unit 370 of the third wireless terminal apparatus 800 (715).

It is assumed here that in the display screen 700 shown in Fig. 19A, the confirm button 705 is pressed after a black dot is added within the hollow circle of the transfer destination (first wireless terminal apparatus 300) in the valid information display area of USIM information 701 (741). If the USIM information transfer operation is accepted as described above (741), a USIM information transfer request is transmitted (741, 742). That is, a USIM information transfer request containing terminal identification information of the transfer request destination (transfer source) having a back dot added thereto is transmitted from the third wireless terminal apparatus 800 to the subscriber information holding server 682 via the network control apparatus 671 (741, 742). The USIM information transfer request contains terminal identification information of the transfer request source (transfer destination) together with terminal identification information of the transfer request destination (transfer source).

When the USIM information transfer request is received (742), the subscriber information holding server 682 extracts the wireless terminal apparatus (first wireless terminal apparatus 300) of the transfer destination from the wireless terminal apparatus management database 690 and also detects the position thereof (743). In this case, the transfer destination is extracted based on terminal identification information contained in the received USIM information transfer request. In addition, the position (current position) of the wireless terminal apparatus of the transfer destination is detected by acquiring position information of a base station to which the wireless terminal apparatus of the transfer destination is connected, position information (for example, position information acquired by the position information acquisition unit 380) transmitted from the wireless terminal apparatus of the transfer destination and the like.

Subsequently, the subscriber information holding server 682 rewrites content of the wireless terminal apparatus management database 690 (644). For example, as shown in Fig 18B, content of the wireless terminal apparatus management database 690 is rewritten so that the first wireless terminal apparatus 300 is enabled and the third wireless terminal apparatus 800 is disabled.

### [Communication example between each apparatus (example of changing the service connected state by an information processing terminal)]

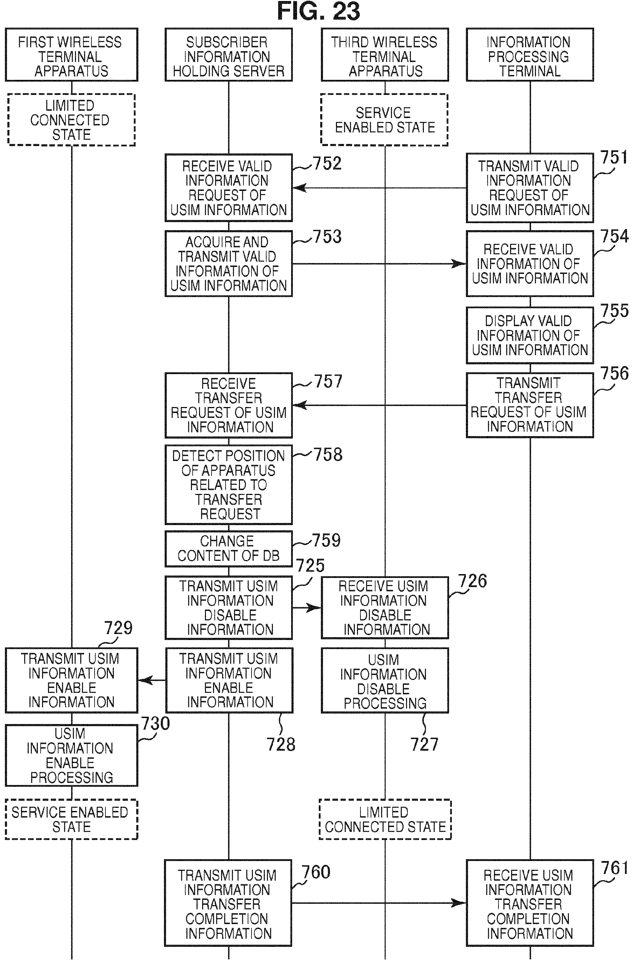

Figs. 21 and 22 show examples of changing the service connected state by using wireless terminal apparatuses sharing the right of network connection (right of use of USIM information). However, the service connected state can also be changed by using an apparatus (for example, an information processing terminal) other than the wireless terminal apparatus. Thus, in Fig. 23, an example of changing the service connected state by using an apparatus other than the wireless terminal apparatus is shown.

Fig. 23 is a sequence chart showing a communication processing example between each apparatus constituting the communication system 670 according to the fourth embodiment of the present disclosure.

Fig. 23 shows an example in which both of the first wireless terminal apparatus 300 and the third wireless terminal apparatus 800 have USIM information and the right of use of the USIM information is transferred based on content of the wireless terminal apparatus management database 690. Also in Fig. 23, communication processing when the information processing terminal 677 makes a transfer request of the right of network connection when the third wireless terminal apparatus 800 holds valid USIM information is taken as an example. That is, in Fig. 23, a communication processing example when the service connected state is changed by using the information processing terminal 677 other than the wireless terminal apparatus is shown. The communication processing example shown in Fig. 23 is a modification of Figs. 21 and 22 and thus, the same reference numerals are attached to elements common to Figs. 21 and 22 and the description thereof is partially omitted.

Processing (751 to 757) shown in Fig. 23 is substantially the same as the processing (711 to 717, 741, 742) shown in Figs. 21 and 22 except that the apparatus related to user operations is different.

When the USIM information transfer request is received (757), the subscriber information holding server 682 extracts the wireless terminal apparatuses (the first wireless terminal apparatus 300 and the third wireless terminal apparatus 800) of the transfer source and the transfer destination from the wireless terminal apparatus management database 690 (758). Also, the subscriber information holding server 682 detects the positions of the transfer source and the transfer destination (758). In this case, the transfer source and the transfer destination are extracted based on terminal identification information contained in the received USIM information transfer request.

Subsequently, the subscriber information holding server 682 rewrites content of the wireless terminal apparatus management database 690 (759).

When enable processing of USIM information of the first wireless terminal apparatus 300 and disable processing of USIM information of the third wireless terminal apparatus 800 are finished, the subscriber information holding server 682 transmits USIM information transfer completion information to the information processing terminal 677 (760, 761).

Therefore, according to the fourth embodiment of the present disclosure, an apparatus (for example, a subscriber information holding server) other than the network control apparatus can perform transfer processing of the right of network connection. That is, the fourth embodiment of the present disclosure can be applied to various communication systems in which the right of network connection is shared among a plurality of wireless terminal apparatuses.

### <5. Fifth embodiment>

In the fourth embodiment of the present disclosure, an example in which a right of network connection is shared among a plurality of wireless terminal apparatuses is shown. Here, a case when each wireless terminal apparatus holds rights of network connection related to wireless operators to manage rights of network connection and the right of network connection related to a wireless operator to receive a desired service is shared among a plurality of wireless terminal apparatuses can also be assumed. Thus, in the fifth (exemplary) embodiment of the present disclosure, an example in which each wireless terminal apparatus holds rights of network connection related to wireless operators to manage rights of network connection and the right of network connection related to a wireless operator to receive a desired service is shared among a plurality of wireless terminal apparatuses is shown. The configuration of a communication system according to the fifth embodiment of the present disclosure partially has elements common to the example shown in Fig. 17 or the like and thus, the description of elements common to the fourth embodiment of the present disclosure is partially omitted.

### [Configuration example of the communication system]

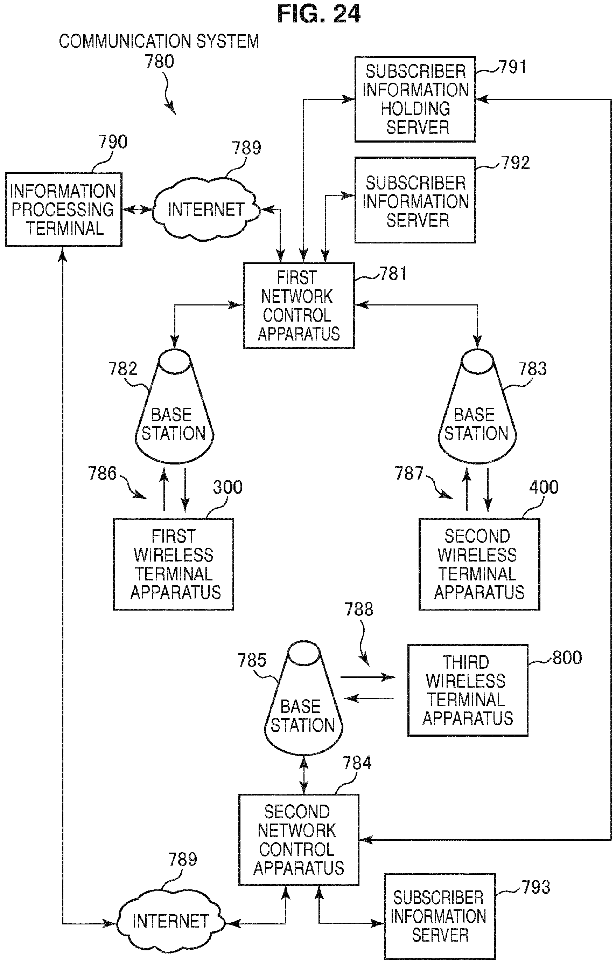

Fig. 24 is a block diagram showing a system configuration example of the communication system 780 according to the fifth embodiment of the present disclosure.

The communication system 780 includes a first network control apparatus 781, a second network control apparatus 784, base stations 782, 783, 785, an internet 789, and an information processing terminal 790. The communication system 780 also includes a subscriber information holding server 791 and subscriber information servers 792, 793. The internet 789 and the first network control apparatus 781 and second network control apparatus 784 are connected via a gateway (not shown).

The base stations 782, 783 are mobile communication base stations (NodeB) that connect the first wireless terminal apparatus 300 and the second wireless terminal apparatus 400 to the first network control apparatus 781 via wireless lines 786, 787. The base station 785 is a mobile communication base station (NodeB) that connects the third wireless terminal apparatus 800 to the second network control apparatus 784 via a wireless line 788.

The first network control apparatus 781 and the second network control apparatus 784 are communication control apparatuses managed by a wireless operator providing wireless connection services and includes an authentication controller (not shown) and a wireless terminal apparatus management database (not shown). The first network control apparatus 781 and the second network control apparatus 784 correspond to the network control apparatus 200 shown in Fig. 2. The authentication controller corresponds to the authentication controller 210 shown in Fig. 2 and the wireless terminal apparatus management database corresponds to the wireless terminal apparatus management database 220 shown in Fig. 2.

The first network control apparatus 781 is a network control apparatus related to a wireless operator (first wireless operator) to manage rights of network connection. The second network control apparatus 784 is a network control apparatus related to a wireless operator (second wireless operator) to receive a desired service.

The subscriber information servers 792, 793 are servers including a database (HLR (home location register)) that manages user information such as the phone number, terminal identification information and the like.

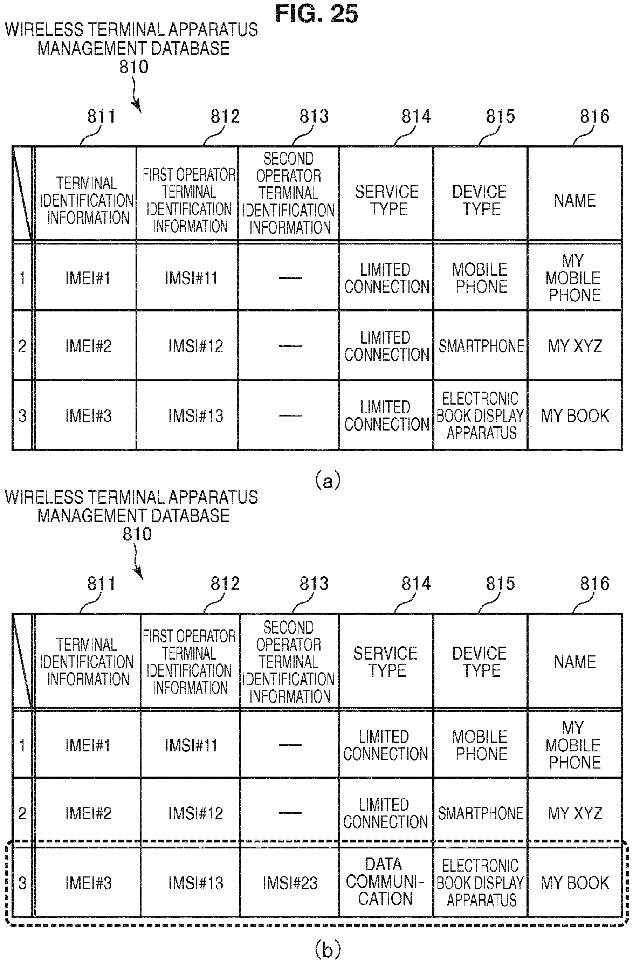

The subscriber information holding server 791 includes the wireless terminal apparatus management database 810 (shown in Fig. 25). The subscriber information holding server 791 corresponds to, for example, the subscriber information holding server 601 shown in Fig. 13. That is, according to the fifth embodiment of the present disclosure, each wireless terminal apparatus can be connected to the first network control apparatus 781 that only manages rights of network connection. Rights of network connection related to the second network control apparatus 784 capable of receiving a desired service are shared among wireless terminal apparatuses.

The information processing terminal 790 is an information processing apparatus (for example, a personal computer) capable of connecting to the internet 789 via a wire line or wireless line.

### [Configuration example of the wireless terminal apparatus management database]

Fig. 25 is a diagram schematically showing the wireless terminal apparatus management database 810 according to the fifth embodiment of the present disclosure. The subscriber information holding server 791 shown in Fig. 24 includes the wireless terminal apparatus management database 810.

The wireless terminal apparatus management database 810 is a database that manages USIM information held by each of the first wireless terminal apparatus 300, the second wireless terminal apparatus 400, and the third wireless terminal apparatus 800. More specifically, terminal identification information 811, first operator contract identification information 812, second operator contract identification information 813, a service type 814, a device type 815, and a name 816 are associated and recorded in the wireless terminal apparatus management database 810. The service type 814, the device type 815, and the name 816 correspond to the service type 692, the device type 693, and the name 694 shown in Fig. 18 respectively.

IMEI specific to each wireless terminal apparatus is stored in the terminal identification information 811.

IMSI distributed from the first wireless operator to each wireless terminal apparatus is stored in the first operator contract identification information 812.

IMSI distributed from the second wireless operator to each wireless terminal apparatus is stored in the second operator contract identification information 813.

Thus, in the fifth embodiment of the present disclosure, IMEI is used as identification information to identify each wireless terminal apparatus and IMSI is distributed from each operator to each wireless terminal apparatus as identification information to identify the contract of each wireless terminal apparatus.

Each wireless terminal apparatus can connect to the first wireless operator (first network control apparatus 781) who only manages rights of network connection by using IMSI distributed to each wireless terminal apparatus by the first wireless operator. In addition, each wireless terminal apparatus shares rights of network connection related to the second wireless operator (second network control apparatus 784) who is capable of actually providing services. Accordingly, sharing of USIM information (contract authentication information) among a plurality of wireless terminal apparatuses can be realized.

In Fig. 25, wireless terminal apparatuses holding no valid USIM information (second wireless operator) are denoted by "Limited connection" to simplify the description. In addition, each piece of information about wireless terminal apparatuses whose USIM information (second wireless operator) is valid by enclosing such information with a thick rectangle. That is, Fig. 25A shows an example in which all wireless terminal apparatuses are in a limited connected state. Fig. 25B shows an example in which the wireless terminal apparatuses of IMSI#1, IMSI#2 are in a limited connected state and the wireless terminal apparatus of IMSI#3 is in a state in which a general public network service of data communication services is available.

Like in the fourth embodiment of the present disclosure, the wireless terminal apparatus management database 810 may be included in HLR (see TS23.002).

### [Communication example between each apparatus (example of initial service connection)]

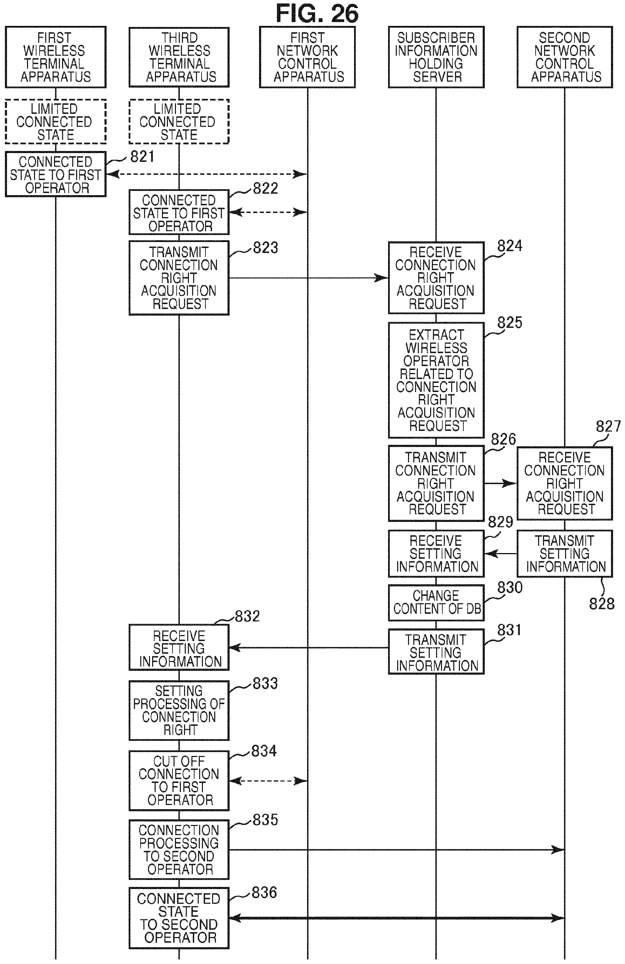

Fig. 26 is a sequence chart showing a communication processing example between each apparatus constituting the communication system 780 according to the fifth embodiment of the present disclosure.

Fig. 26 shows an example in which the third wireless terminal apparatus 800 acquires the right of use of USIM information (second wireless operator) (right of network connection) by using USIM information (first wireless operator).

It is assumed that initially the first wireless terminal apparatus 300 and the third wireless terminal apparatus 800 are in a connected state to the first wireless operator (first network control apparatus 781) (821, 822).

It is assumed here that operation input to request a service desired by the user is done in the third wireless terminal apparatus 800. In that case, a connection right acquisition request to request the connection right of the service is transmitted from the third wireless terminal apparatus 800 to the subscriber information holding server 791 via the first network control apparatus 781 (823, 824). The USIM information acquisition request is transmitted from the first wireless terminal apparatus 300 to the first network control apparatus 781 by using USIM information (first wireless operator).

When the connection right acquisition request is received by the subscriber information holding server 791 (824), the subscriber information holding server 682 detects the wireless operator in which a service related to the connection right acquisition request exists (825). In this example, it is assumed that a service related to the connection right acquisition request exists in the second wireless operator.

Subsequently, the subscriber information holding server 791 transmits a request (USIM information acquisition request) to receive the service related to the connection right acquisition request to the second network control apparatus 784 (826). When the second network control apparatus 784 receives the USIM information acquisition request (827), the second network control apparatus 784 transmits setting information to set valid USIM information to the subscriber information holding server 791 (828). When the subscriber information holding server 791 receives the setting information (829), the subscriber information holding server 791 rewrites content of the wireless terminal apparatus management database 810 (830). For example, as shown in Fig. 25B, content of the wireless terminal apparatus management database 810 is rewritten so that the third wireless terminal apparatus 800 is enabled.

Subsequently, the subscriber information holding server 791 transmits setting information to set valid USIM information to the wireless terminal apparatus having transmitted the connection right acquisition request to the third wireless terminal apparatus 800 via the first network control apparatus 781 (831). When the third wireless terminal apparatus 800 received the setting information (832), the control unit 330 of the third wireless terminal apparatus 800 performs setting processing of USIM information stored in the USIM information storage unit 350 of the third wireless terminal apparatus 800 (833). Accordingly, valid USIM information (second wireless operator) is set to the third wireless terminal apparatus 800 and the third wireless terminal apparatus 800 can now connect to the second wireless operator (second network control apparatus 784).

Subsequently, the third wireless terminal apparatus 800 to which the valid USIM information (second wireless operator) has been set cuts off the connection to the wireless operator (first wireless operator) to which the correction is currently maintained (834). Subsequently, the third wireless terminal apparatus 800 performs connection processing to the second wireless operator (second network control apparatus 784) by using the newly set USIM information (second wireless operator) (835). Then, the third wireless terminal apparatus 800 secures a connected state to the second wireless operator (second network control apparatus 784) to make a transition to a connected state in which a desired service can be received (836).

### [Communication example between each apparatus (example of changing the service connected state by an apparatus in a limited connected state)]

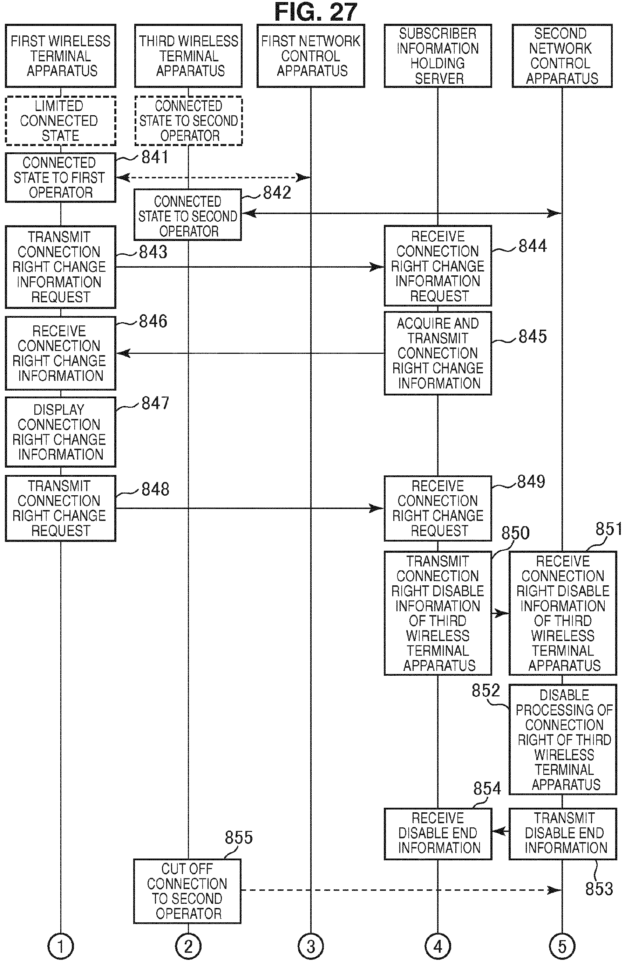

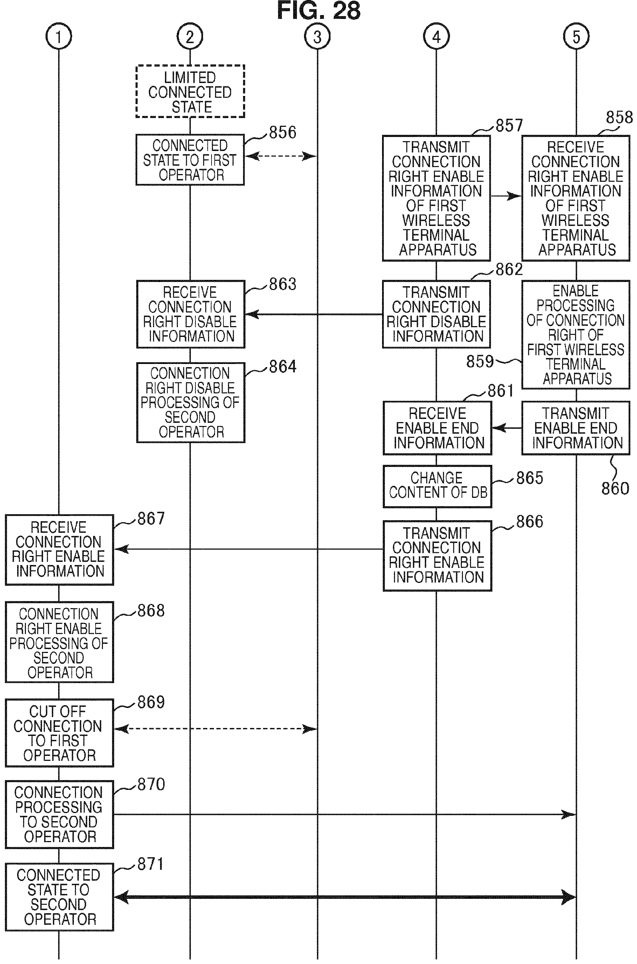

Figs. 27 and 28 show sequence charts showing a communication processing example between each apparatus constituting the communication system 780 according to the fifth embodiment of the present disclosure.

In Figs. 27 and 28, an example in which when the third wireless terminal apparatus 800 is in a connected state capable of receiving a desired service, the connected state is changed by using the first wireless terminal apparatus 300 is shown.

It is assumed that initially the first wireless terminal apparatus 300 is in a connected state to the first wireless operator (first network control apparatus 781) and the third wireless terminal apparatus 800 is in a connected state to the second wireless operator (second network control apparatus 784) (841, 842). These connected states correspond to the connected states (821, 836) shown in Fig. 26.

First, operation input to request connection right change information to change the connected state capable of receiving a desired service is done. In this case, a connection right change information request to request connection right change information is transmitted from the first wireless terminal apparatus 300 to the subscriber information holding server 791 via the first network control apparatus 781 (843, 844).

When the connection right change information request is received (844), the subscriber information holding server 791 acquires content of the wireless terminal apparatus management database 810 and transmits the content to the first wireless terminal apparatus 300 via the first network control apparatus 781 (845). When the first wireless terminal apparatus 300 receives connection right change information (846), a display screen containing the connection right change information is displayed in the display unit 370 of the first wireless terminal apparatus 300 (847).

Subsequently, it is assumed that an operation (change operation from the third wireless terminal apparatus 800 to the first wireless terminal apparatus 300) to change the connected state capable of receiving a desired service is performed in the display screen containing the connection right change information (848). If the change operation is accepted as described above, a connection right change request containing terminal identification information of the transfer request destination (transfer source) related to the change is transmitted from the first wireless terminal apparatus 300 to the subscriber information holding server 791 via the first network control apparatus 781 (848, 849). The connection right change request contains terminal identification information of the transfer request source (transfer destination) together with terminal identification information of the transfer request destination (transfer source).

When the connection right change request is received (849), the subscriber information holding server 791 extracts the wireless terminal apparatus (third wireless terminal apparatus 800) of the transfer request destination (transfer source) from the wireless terminal apparatus management database 810 (850). In this case, the transfer request destination (transfer source) is extracted based on terminal identification information contained in the received connection right change request.

Subsequently, the subscriber information holding server 791 transmits connection right disable information to disable the connection right (right of use of USIM information) of the extracted transfer request destination (transfer source) to the second network control apparatus 784 (850).

When the connection right disable information is received (851), the second network control apparatus 784 performs disable processing of the connection right of the wireless terminal apparatus (third wireless terminal apparatus 800) of the transfer request destination (transfer source) (852). That is, the second network control apparatus 784 rewrites content of the wireless terminal apparatus management database of the subscriber information server 793 (852). Subsequently, the second network control apparatus 784 transmits disable end information indicating that disable processing of the connection right is finished to the subscriber information holding server 791 (853, 854). Accordingly, the connection between the third wireless terminal apparatus 800 and the second wireless operator is cut off (855) and the third wireless terminal apparatus 800 and the first wireless operator (first network control apparatus 781) are in a connected state (856).

Subsequently, the subscriber information holding server 791 transmits connection right enable information to enable the connection right of the transfer request source (transfer destination) to the second network control apparatus 784 (857). When the connection right enable information is received (858), the second network control apparatus 784 performs enable processing of the connection right of the wireless terminal apparatus (first wireless terminal apparatus 300) of the transfer request source (transfer destination) (859). That is, the second network control apparatus 784 rewrites content of the wireless terminal apparatus management database of the subscriber information server 793 (859). Subsequently, the second network control apparatus 784 transmits enable end information indicating that enable processing of the connection right is finished to the subscriber information holding server 791 (860, 861).

Also, the subscriber information holding server 791 transmits connection right disable information to disable the connection right of the transfer request destination (transfer source) to the third wireless terminal apparatus 800 via the first network control apparatus 781 (862). When the third wireless terminal apparatus 800 receives the connection right disable information (863), the third wireless terminal apparatus 800 performs connection right disable processing of the second wireless operator (864).

When the enable end information is received (861), the subscriber information holding server 791 rewrites content of the wireless terminal apparatus management database 810 (865).

Also, the subscriber information holding server 791 transmits connection right enable information to enable the connection right of the transfer request source (transfer destination) to the first wireless terminal apparatus 300 via the first network control apparatus 781 (866). When the first wireless terminal apparatus 300 receives the connection right enable information (867), the first wireless terminal apparatus 300 performs connection right enable processing of the second wireless operator (868).

Subsequently, the first wireless terminal apparatus 300 to which the valid USIM information (second wireless operator) has been set cuts off the connection to the wireless operator (first wireless operator) to which the correction is currently maintained (869). Subsequently, the first wireless terminal apparatus 300 performs connection processing to the second wireless operator (second network control apparatus 784) by using the newly set USIM information (second wireless operator) (870). Then, the first wireless terminal apparatus 300 secures a connected state to the second wireless operator (second network control apparatus 784) to make a transition to a connected state in which a desired service can be received (871).

### [Communication example between each apparatus (example of changing the service connected state by an apparatus in a service connected state)]

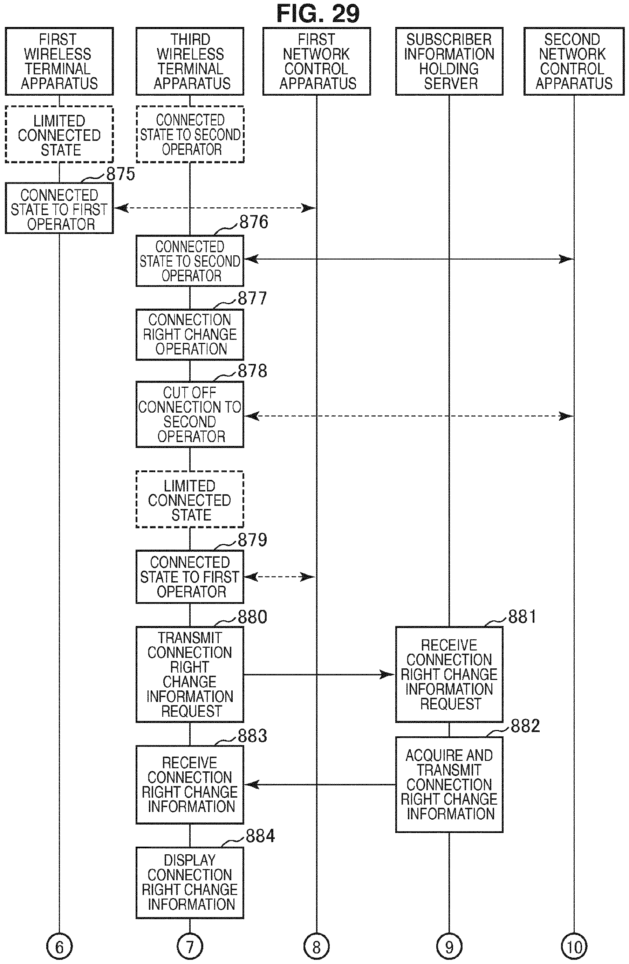

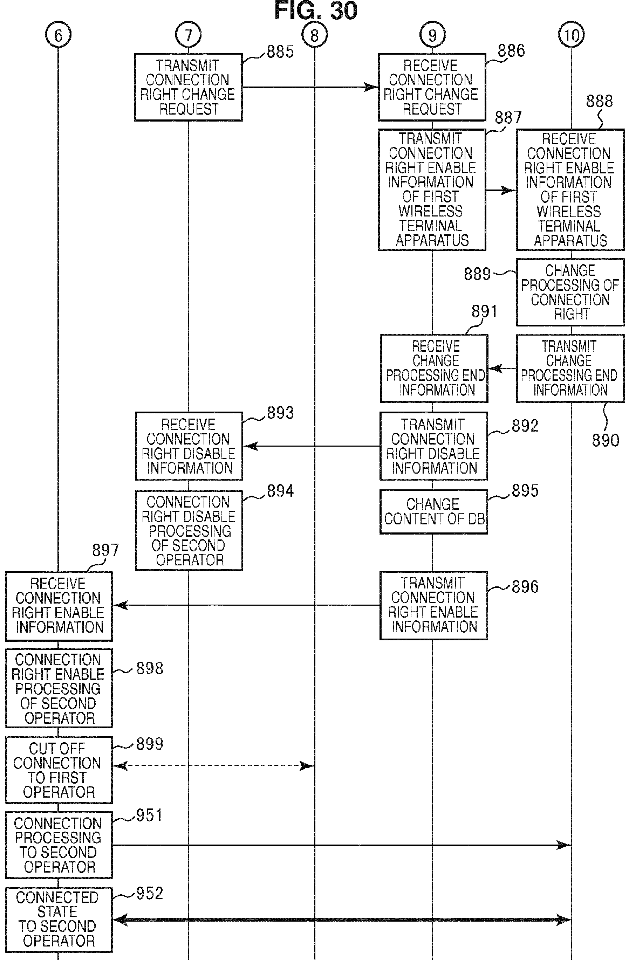

Figs. 29 and 30 show sequence charts showing a communication processing example between each apparatus constituting the communication system 780 according to the fifth embodiment of the present disclosure.

In Figs. 29 and 30, an example in which when the third wireless terminal apparatus 800 is in a connected state capable of receiving a desired service, the connected state is changed by using the third wireless terminal apparatus 800 is shown. The example shown in Figs. 29 and 30 is a modification of Figs. 27 and 28 and thus, the description of a portion common to Figs. 27 and 28 (portion corresponding to Figs. 27 and 28) is partially omitted.

It is assumed here that the first wireless terminal apparatus 300 is in a connected state to the first wireless operator (first network control apparatus 781) and the third wireless terminal apparatus 800 is in a connected state to the second wireless operator (second network control apparatus 784) (875, 876). These connected states correspond to the connected states (841, 842) shown in Fig. 27.

First, operation input to request connection right change information to change the connected state capable of receiving a desired service is done. Accordingly, the connection between the third wireless terminal apparatus 800 and the second wireless operator is cut off (878) and the third wireless terminal apparatus 800 and the first wireless operator (first network control apparatus 781) are in a connected state (879).

The processing (880 to 886) shown in Figs. 29 and 30 corresponds to the processing (843 to 849) shown in Figs. 27 and 28.

When the connection right change request is received (886), the subscriber information holding server 791 extracts the transfer source and the transfer destination from the wireless terminal apparatus management database 810 (887). Subsequently, the subscriber information holding server 791 transmits connection right enable information to change the connection right to the second network control apparatus 784 (887).

When the connection right enable information is received (888), the second network control apparatus 784 performs change processing of the connection right (889). That is, disable processing of the connection right of the wireless terminal apparatus (third wireless terminal apparatus 800) of the transfer source is performed and enable processing of the connection right of the wireless terminal apparatus (first wireless terminal apparatus 300) of the transfer destination is performed (889). Subsequently, the second network control apparatus 784 transmits change processing end information indicating that change processing of the connection right is finished to the subscriber information holding server 791 (890, 891).

The processing (892 to 894) shown in Figs. 29 and 30 corresponds to the processing (862 to 864) shown in Figs. 27 and 28. Also, the processing (895 to 899, 951, 952) shown in Figs. 29 and 30 corresponds to the processing (865 to 871) shown in Figs. 27 and 28.

### [Communication example between each apparatus (example of changing the service connected state by an information processing terminal)]

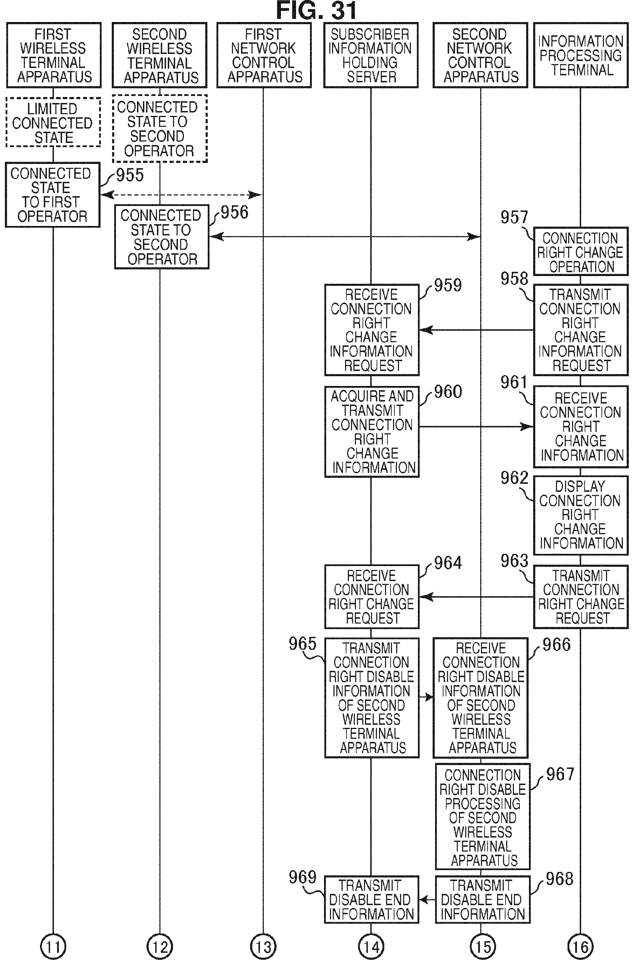

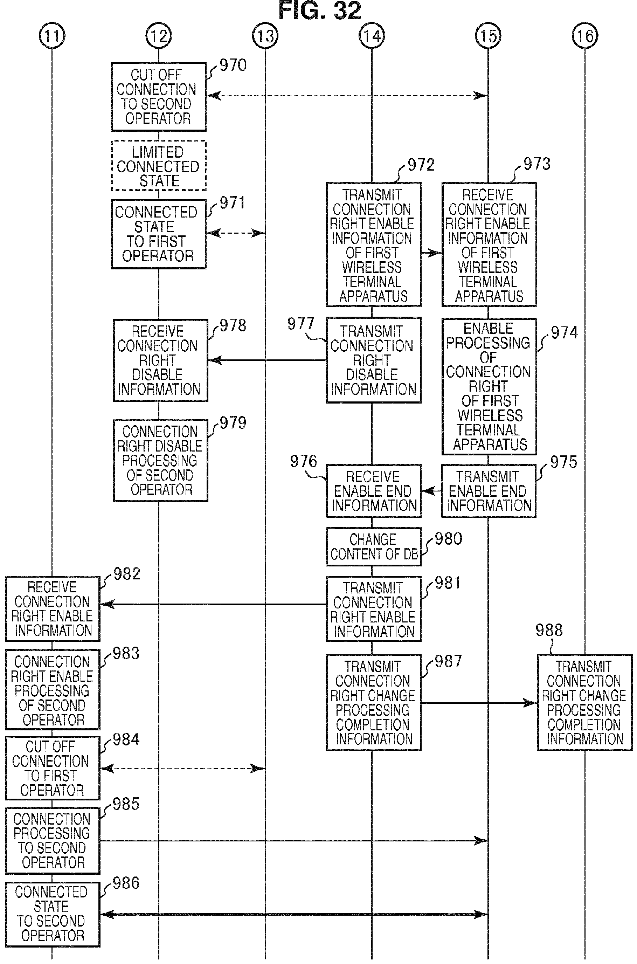

Figs. 27 to 30 show examples of changing the service connected state by using wireless terminal apparatuses sharing the right of network connection. However, the service connected state can also be changed by using an apparatus (for example, an information processing terminal) other than the wireless terminal apparatus. Thus, in Figs. 31 and 32, an example of changing the service connected state by using an apparatus other than the wireless terminal apparatus is shown.

Figs. 31 and 32 show sequence charts showing a communication processing example between each apparatus constituting the communication system 780 according to the fifth embodiment of the present disclosure.

In Figs. 31 and 32, an example in which when the third wireless terminal apparatus 800 is in a connected state capable of receiving a desired service, the connected state is changed by using the information processing terminal 790 is shown. The example shown in Figs. 31 and 32 is a modification of Figs. 27 and 28 and thus, the description of a portion common to Figs. 27 and 28 (portion corresponding to Figs. 27 and 28) is partially omitted.

First, a connection right change operation to change the connected state in which the third wireless terminal apparatus 800 can receive a desired service is performed in the information processing terminal 790 (957). Accordingly, a connection right change information request is transmitted from the information processing terminal 790 to the subscriber information holding server 791 via the internet 789 and the second network control apparatus 784 (958, 959). The subsequent processing (958 to 986) is substantially the same as the processing (843 to 871) in Figs. 27 and 28 except that the apparatus related to user operations is different.

When the connection right change processing from the third wireless terminal apparatus 800 to the first wireless terminal apparatus 300 is finished, connection right change processing completion information is transmitted from the subscriber information holding server 791 to the information processing terminal 790 (987, 988).

In the fifth embodiment of the present disclosure, as described above, each wireless terminal apparatus holds rights of network connection related to wireless operators to manage rights of network connection. Rights of network connection related to wireless operators to receive a desired service are shared among a plurality of wireless terminal apparatuses. The fifth embodiment of the present disclosure can be applied to various communication systems in which the right of network connection is shared among a plurality of wireless terminal apparatuses.

According to an embodiment of the present disclosure, a first network connection right to connect to a first network (for example, a first wireless operator) and a second network connection right to connect to another network (for example, a second wireless operator) can be set.

If a connection based on the second network connection right is established when rewrite information (for example, a connection right change request) is transmitted to a subscriber information holding server, the control unit 330 of each wireless terminal apparatus makes a reconnection based on the first network connection right. Then, the control unit 330 exercises control to transmit the rewrite information after the reconnection is made.

The receiving unit of each wireless terminal apparatus receives database information including content of a wireless terminal apparatus management database (690, 810 and the like) from a subscriber information holding server. The control unit 330 of each wireless terminal apparatus causes the display unit 370 to display the content based on the received database information. Then, the control unit 330 of each wireless terminal apparatus exercises control to transmit rewrite information (for example, a connection right change request) based on a user operation to rewrite content displayed in the display unit 370 to the subscriber information holding server.

The wireless terminal apparatus management database (690, 810 and the like) associates and holds identification information to identify a plurality of wireless terminal apparatuses and each wireless terminal apparatus. Then, when an acquisition request of the identification information based on a user operation is received, the control unit of the subscriber information holding server exercises control, based on the acquisition request, to transmit the identification information to the wireless terminal apparatus related to the acquisition request.

The wireless terminal apparatus management database (690, 810 and the like) associates and holds information (812, 813 and the like) about the network control apparatus to which each of a plurality of wireless terminal apparatuses is connected and each wireless terminal apparatus.

Also, the wireless terminal apparatus management database (690, 810 and the like) includes IMEI, IMSI, and other identification information. IMSI is identification information to identify USIM information (contract authentication information) related to, for example, rights of network connection and IMEI is identification information to identify, for example, a plurality of wireless terminal apparatuses. The identification information is identification information (the names 694, 816 and the like set by a user operation) to identify, for example, a plurality of wireless terminal apparatuses. The identification information is also identification information (692, 812, 813 and the like) to identify, for example, a wireless terminal apparatus in a specific state capable of receiving the provision of a desired service via a network from a plurality of wireless terminal apparatuses. The identification information is also identification information (692, 812, 813 and the like) to identify, for example, a wireless terminal apparatus to which a specific right of network connection capable of receiving the provision of a desired service via a network is set from a plurality of wireless terminal apparatuses.

The embodiments of the present disclosure can be applied to mobile or fixed wireless terminal apparatuses (for example, data communication dedicated terminal apparatuses) other than mobile phone apparatuses and fixed wireless terminal apparatuses (for example, wireless terminal apparatuses intended for data collection of vending machines).

The embodiments of the present disclosure have been described by taking the right of use of USIM information as an example of the right of network connection. However, the embodiments of the present disclosure can also be applied to other rights of network connection to connect to a predetermined network based on other information.

The embodiments of the present disclosure are shown only by way of example to embody the present disclosure and, as explicitly described in the embodiments of the present disclosure, there is a correspondence between matter in the embodiments of the present disclosure and subject matter in claims. Similarly, there is a correspondence between subject matter in claims and matter with the same name attached in the embodiments of the present disclosure. However, the present disclosure is not limited to the above embodiments and can be embodied by making various modifications without deviating from scope of the present disclosure.

Processing procedures described in the embodiments of the present disclosure may be grasped as methods having such a series of procedures or as a program causing a computer to execute such a series of procedures or a recording medium recording the program. As the recording medium, for example, a CD (Compact Disc), MD (Mini Disc), DVD (Digital Versatile Disk), memory card, Blu-ray Disc (registered trademark) or the like can be used.

### Reference Signs List

- 100, 600, 670, 780: Communication system
- 110: Public network
- 200, 671: Network control apparatus
- 210, 611, 616: Authentication controller
- 220, 612, 617, 620, 690, 810: Wireless terminal apparatus management database
- 230, 240, 602, 603, 672, 673, 782, 783, 785: Base station
- 251 to 253, 604, 605, 674 to 676, 786, 787, 788: Wireless line
- 300: First wireless terminal apparatus
- 311: Antenna
- 312: Antenna shared unit
- 321: Modulation unit
- 322: Demodulation unit
- 330: Control unit
- 340: Memory
- 350: USIM information storage unit
- 360: Operation unit
- 370: Display unit
- 380: Position information acquisition unit
- 391: Microphone
- 392: Speaker
- 400: Second wireless terminal apparatus
- 601, 682, 791: Subscriber information holding server
- 610, 781: First network control apparatus
- 615,784: Second network control apparatus
- 677, 790: Information processing terminal
- 678, 789: Internet
- 681, 792, 793: Subscriber information server
- 800: Third wireless terminal apparatus

## Claims

1. A wireless terminal apparatus (300, 400, 800), comprising:
a receiving unit (312) that receives setting information to share a right of network connection to connect to a predetermined network via a wireless line with one or a plurality of other wireless terminal apparatuses; and
a control unit (330, 350) that sets the right of network connection based on the setting information, **characterised in that**:
the right of network connection is a right to allow a plurality of network connected states in which service contents provided via the network after connection to the network is established are mutually different,
the setting information is information to set the right of network connection that causes the wireless terminal apparatus to enter at least one network connected state of the plurality of network connected states, and
the plurality of network connected states comprises a first state and a second state, the first state being a limited connected state to change the right of network connection and the second state being a connected state based in which the provision of a desired service can be received via a network after connection is established to the network.

2. The wireless terminal apparatus according to claim 1,
wherein a plurality of networks includes a first network and a second network,
wherein the control unit is a first control unit connected to the first network, and
wherein the setting information is transmitted by a second control unit connected to the second network.

3. The wireless terminal apparatus according to claim 1, wherein the plurality of network connected states includes a first network connected state to change the right of network connection and a second network connected state in which provision of a desired service can be received via the network after the connection to the network is established.

4. The wireless terminal apparatus according to claim 3,
wherein one wireless terminal apparatus constituting the wireless terminal apparatus and the one or the plurality of other wireless terminal apparatuses is caused to enter the first network connected state or the second network connected state, and
wherein the wireless terminal apparatuses other than the one wireless terminal apparatus of wireless terminal apparatuses each constituting the wireless terminal apparatus and the one or the plurality of other wireless terminal apparatuses are caused to enter only the first network connected state.

5. The wireless terminal apparatus according to claim 3,
wherein the first network connected state is a state to connect to a first network, and
wherein the second network connected state is a state to connect to a network different from the first network.

6. The wireless terminal apparatus according to claim 3, wherein if a connection based on the second network connected state is established when rewrite information is transmitted to an information processing apparatus that rewrites a content of a database based on the rewrite information after the rewrite information based on a user operation is received by including the database that manages the right of network connection, and that associates and holds each of wireless terminal apparatuses constituting the wireless terminal apparatus and the one or the plurality of other wireless terminal apparatuses with a type of the right of network connection set to each of the wireless terminal apparatuses, the control unit exercises control to transmit the rewrite information after a reconnection based on the first network connected state is established.

7. The wireless terminal apparatus according to claim 6,
wherein the receiving unit receives database information containing the content of the database from the information processing apparatus, and
wherein the control unit exercises control to cause a display unit to display the content of the database based on the received database information and to transmit the rewrite information based on a user operation to rewrite the content of the database displayed in the display unit to the information processing apparatus.

8. The wireless terminal apparatus according to claim 1,
wherein the right of network connection includes a plurality of rights of network connection whose service contents provided via the network after the connection to the network is established are mutually different, and
wherein the control unit sets at least one right of network connection of the plurality of rights of network connection based on the setting information.

9. The wireless terminal apparatus according to claim 8,
wherein the plurality of rights of network connection include a first right of network connection to change the right of network connection and a second right of network connection with which provision of a desired service can be received via the network after the connection to the network is established.

10. A control method of a wireless terminal apparatus, comprising:
receiving setting information to share a right of network connection to connect to a predetermined network via a wireless line with one or a plurality of other wireless terminal apparatuses; and
setting the right of network connection based on the setting information, **characterised in that**:
the right of network connection is a right to allow a plurality of network connected states in which service contents provided via the network after connection to the network is established are mutually different,
the setting information is information to set the right of network connection that causes the wireless terminal apparatus to enter at least one network connected state of the plurality of network connected states, and
the plurality of network connected states comprises a first state and a second state, the first state being a limited connected state to change the right of network connection and the second state being a connected state based in which the provision of a desired service can be received via a network after connection is established to the network.

## Patentansprüche

1. Drahtlose Endgerätevorrichtung (300, 400, 800), umfassend:
eine Empfangseinheit (312), die Einstellungsinformationen empfängt, um ein Netzwerkverbindungsrecht zum Verbinden mit einem vorbestimmten Netzwerk über eine Drahtlosleitung mit einem oder einer Vielzahl von anderen drahtlosen Endgerätevorrichtungen zu teilen; und
eine Steuereinheit (330, 350), die das Netzwerkverbindungsrecht basierend auf den Einstellungsinformationen einstellt, **dadurch gekennzeichnet, dass**:
das Netzwerkverbindungsrecht ein Recht ist, eine Vielzahl von Netzwerkverbindungszuständen zu ermöglichen, in denen über das Netzwerk bereitgestellte Dienstinhalte nach Herstellung der Verbindung zum Netzwerk gegenseitig verschieden sind,
die Einstellungsinformationen Informationen zum Einstellen des Netzwerkverbindungsrechts sind, die die drahtlose Endgerätevorrichtung dazu veranlassen, in mindestens einen Netzwerkverbindungszustand der Vielzahl von Netzwerkverbindungszuständen einzutreten, und
die Vielzahl von Netzverbindungszuständen einen ersten Zustand und einen zweiten Zustand umfasst, wobei der erste Zustand ein begrenzter Verbindungszustand zum Ändern des Netzwerkverbindungsrechts ist und der zweite Zustand ein Verbindungszustand ist, in dem die Bereitstellung eines gewünschten Dienstes über ein Netzwerk empfangen werden kann, nachdem die Verbindung zum Netzwerk hergestellt wurde.

2. Drahtlose Endgerätevorrichtung gemäß Anspruch 1,
wobei eine Vielzahl von Netzwerken ein erstes Netzwerk und ein zweites Netzwerk aufweist,
wobei die Steuereinheit eine erste Steuereinheit ist, die mit dem ersten Netzwerk verbunden ist, und
wobei die Einstellungsinformationen durch eine zweite Steuereinheit übertragen werden, die mit dem zweiten Netzwerk verbunden ist.

3. Drahtlose Endgerätevorrichtung gemäß Anspruch 1, wobei die Vielzahl von Netzwerkverbindungszuständen einen ersten Netzwerkverbindungszustand zum Ändern des Netzwerkverbindungsrechts und einen zweiten Netzwerkverbindungszustand aufweist, in dem die Bereitstellung eines gewünschten Dienstes über das Netzwerk empfangen werden kann, nachdem die Verbindung zum Netzwerk hergestellt wurde.

4. Drahtlose Endgerätevorrichtung gemäß Anspruch 3,
wobei eine drahtlose Endgerätevorrichtung, die die drahtlose Endgerätevorrichtung und die eine oder die Vielzahl von anderen drahtlosen Endgerätevorrichtungen darstellt, veranlasst wird, in den ersten Netzwerkverbindungszustand oder den zweiten Netzwerkverbindungszustand einzutreten, und
wobei die anderen drahtlosen Endgerätevorrichtungen als die eine drahtlose Endgerätevorrichtung der drahtlosen Endgerätegerätevorrichtungen, die jeweils die drahtlose Endgerätevorrichtung und die eine oder die Vielzahl von anderen drahtlosen Endgerätevorrichtungen darstellen, veranlasst werden, nur in den ersten Netzwerkverbindungszustand einzutreten.

5. Drahtlose Endgerätevorrichtung gemäß Anspruch 3,
wobei der erste Netzwerkverbindungszustand ein Zustand zum Verbinden mit einem ersten Netzwerk ist, und
wobei der zweite Netzwerkverbindungszustand ein Zustand zum Verbinden mit einem vom ersten Netzwerk verschiedenen Netzwerk ist.

6. Drahtlose Endgerätevorrichtung gemäß Anspruch 3, wobei, wenn eine Verbindung basierend auf dem zweiten Netzwerkverbindungszustand hergestellt wird, wenn Neuschreibinformationen an eine Informationsverarbeitungsvorrichtung übertragen werden, die einen Inhalt einer Datenbank basierend auf den Neuschreibinformationen neu schreibt, nachdem die Neuschreibinformationen basierend auf einem Benutzervorgang durch Einbeziehen der Datenbank, die das Netzwerkverbindungsrecht verwaltet und die jede der drahtlosen Endgerätevorrichtungen, die die drahtlose Endgerätevorrichtung und die eine oder die Vielzahl von anderen drahtlosen Endgerätevorrichtungen darstellen, mit einer für jede der drahtlosen Endgerätevorrichtungen festgelegten Art des Netzwerkverbindungsrechts verknüpft und speichert, empfangen werden, die Steuereinheit die Steuerung ausübt, um die Neuschreibinformationen zu übertragen, nachdem eine Neuverbindung basierend auf dem ersten Netzwerkverbindungszustand hergestellt wurde.

7. Drahtlose Endgerätevorrichtung gemäß Anspruch 6,
wobei die Empfangseinheit Datenbankinformationen, die den Inhalt der Datenbank enthalten, aus der Informationsverarbeitungsvorrichtung empfängt, und
wobei die Steuereinheit eine Steuerung ausübt, um eine Anzeigeeinheit zu veranlassen, den Inhalt der Datenbank basierend auf den empfangenen Datenbankinformationen anzuzeigen und die Neuschreibinformationen basierend auf einem Benutzervorgang zum Neuschreiben des Inhalts der in der Anzeigevorrichtung angezeigten Datenbank an die Informationsverarbeitungsvorrichtung zu übertragen.

8. Drahtlose Endgerätevorrichtung gemäß Anspruch 1,
wobei das Netzwerkverbindungsrecht eine Vielzahl von Netzwerkverbindungsrechten aufweist, deren Dienstinhalte, die nach dem Herstellen der Verbindung zum Netzwerk über das Netzwerk bereitgestellt werden, gegenseitig verschieden sind, und
wobei die Steuereinheit mindestens ein Netzwerkverbindungsrecht der Vielzahl von Netzwerkverbindungsrechten basierend auf den Einstellungsinformationen einstellt.

9. Drahtlose Endgerätevorrichtung gemäß Anspruch 8,
wobei die Vielzahl von Netzwerkverbindungsrechten ein erstes Netzwerkverbindungsrecht zum Ändern des Netzwerkverbindungsrechts und ein zweites Netzwerkverbindungsrecht aufweisen, mit dem die Bereitstellung eines gewünschten Dienstes über das Netzwerk empfangen werden kann, nachdem die Verbindung zum Netzwerk hergestellt wurde.

10. Steuerungsverfahren einer drahtlosen Endgerätevorrichtung, umfassend:
Empfangen von Einstellungsinformationen, um ein Netzwerkverbindungsrecht zum Verbinden mit einem vorbestimmten Netzwerk über eine Drahtlosleitung mit einer oder einer Vielzahl von anderen drahtlosen Endgerätevorrichtungen zu teilen; und
Einstellen des Netzwerkverbindungsrechts basierend auf den Einstellungsinformationen, **dadurch gekennzeichnet, dass**:
das Netzwerkverbindungsrecht ein Recht ist, eine Vielzahl von Netzwerkverbindungszuständen zu ermöglichen, in denen über das Netzwerk bereitgestellte Dienstinhalte nach Herstellung der Verbindung zum Netzwerk gegenseitig verschieden sind,
die Einstellungsinformationen Informationen zum Einstellen des Netzwerkverbindungsrechts sind, die die drahtlose Endgerätevorrichtung dazu veranlassen, in mindestens einen Netzwerkverbindungszustand der Vielzahl von Netzwerkverbindungszuständen einzutreten, und
die Vielzahl von Netzverbindungszuständen einen ersten Zustand und einen zweiten Zustand umfasst, wobei der erste Zustand ein begrenzter Verbindungszustand zum Ändern des Netzwerkverbindungsrechts ist und der zweite Zustand ein Verbindungszustand ist, in dem die Bereitstellung eines gewünschten Dienstes über ein Netzwerk empfangen werden kann, nachdem die Verbindung zum Netzwerk hergestellt wurde.

## Revendications

1. Appareil terminal (300, 400, 800) sans fil, comportant :
une unité (312) de réception qui reçoit des informations de réglage pour partager un droit de connexion à un réseau servant à se connecter à un réseau prédéterminé via une ligne sans fil avec un autre ou une pluralité d'autres appareils terminaux sans fil ; et
une unité (330, 350) de commande qui règle le droit de connexion au réseau d'après les informations de réglage, **caractérisé en ce que** :
le droit de connexion au réseau est un droit servant à permettre une pluralité d'états connectés au réseau dans lesquels des contenus de service fournis via le réseau après que la connexion au réseau a été établie sont mutuellement différents,
les informations de réglage sont des informations servant à régler le droit de connexion au réseau qui amènent l'appareil terminal sans fil à entrer dans au moins un état connecté au réseau parmi la pluralité d'états connectés au réseau, et
la pluralité d'états connectés au réseau comporte un premier état et un second état, le premier état étant un état connecté limité servant à modifier le droit de connexion au réseau et le second état étant un état connecté sur la base duquel la fourniture d'un service souhaité peut être reçue via un réseau après que la connexion au réseau a été établie.

2. Appareil terminal sans fil selon la revendication 1,
une pluralité de réseaux comprenant un premier réseau et un second réseau,
l'unité de commande étant une première unité de commande reliée au premier réseau, et
les informations de réglage étant émises par une seconde unité de commande reliée au second réseau.

3. Appareil terminal sans fil selon la revendication 1, la pluralité d'états connectés au réseau comprenant un premier état connecté au réseau servant à modifier le droit de connexion au réseau et un second état connecté au réseau dans lequel la fourniture d'un service souhaité peut être reçue via le réseau après que la connexion au réseau a été établie.

4. Appareil terminal sans fil selon la revendication 3,
un appareil terminal sans fil constituant l'appareil terminal sans fil et l'autre ou la pluralité d'autres appareils terminaux sans fil étant amené à entrer dans le premier état connecté au réseau ou le second état connecté au réseau, et
les appareils terminaux sans fil autres que l'appareil terminal sans fil considéré, parmi des appareils terminaux sans fil constituant chacun l'appareil terminal sans fil et l'autre ou la pluralité d'autres appareils terminaux sans fil, étant amenés à entrer uniquement dans le premier état connecté au réseau.

5. Appareil terminal sans fil selon la revendication 3,
le premier état connecté au réseau étant un état servant à se connecter à un premier réseau, et
le second état connecté au réseau étant un état servant à se connecter à un réseau différent du premier réseau.

6. Appareil terminal sans fil selon la revendication 3, **caractérisé en ce que**, si une connexion basée sur le second état connecté au réseau est établie lorsque des informations de réécriture sont transmises à un appareil de traitement d'informations qui réécrit un contenu d'une base de données d'après les informations de réécriture après que les informations de réécriture basées sur une opération d'utilisateur ont été reçues en incluant la base de données qui gère le droit de connexion au réseau, et qui associe et contient chacun des appareils terminaux sans fil constituant l'appareil terminal sans fil et l'autre ou la pluralité d'autres appareils terminaux sans fil à un type du droit de connexion au réseau réglé pour chacun des appareils terminaux sans fil, l'unité de commande exerce un contrôle pour émettre les informations de réécriture après qu'une reconnexion basée sur le premier état connecté au réseau a été établie.

7. Appareil terminal sans fil selon la revendication 6,
l'unité de réception recevant des informations de base de données contenant le contenu de la base de données en provenance de l'appareil de traitement d'informations, et
l'unité de commande exerçant un contrôle pour amener une unité d'affichage à afficher le contenu de la base de données d'après les informations de base de données reçues et à transmettre les informations de réécriture basées sur une opération d'utilisateur visant à réécrire le contenu de la base de données affiché dans l'unité d'affichage à l'appareil de traitement d'informations.

8. Appareil terminal sans fil selon la revendication 1,
le droit de connexion au réseau comprenant une pluralité de droits de connexion au réseau dont les contenus de service fournis via le réseau après que la connexion au réseau a été établie sont mutuellement différents, et
l'unité de commande réglant au moins un droit de connexion à un réseau de la pluralité de droits de connexion au réseau d'après les informations de réglage.

9. Appareil terminal sans fil selon la revendication 8,
la pluralité de droits de connexion au réseau incluant un premier droit de connexion à un réseau servant à modifier le droit de connexion au réseau et un second droit de connexion à un réseau avec lequel la fourniture d'un service souhaité peut être reçue via le réseau après que la connexion au réseau a été établie.

10. Procédé de commande d'un appareil terminal sans fil, comportant les étapes consistant à :
recevoir des informations de réglage pour partager un droit de connexion à un réseau servant à se connecter à un réseau prédéterminé via une ligne sans fil avec un autre ou une pluralité d'autres appareils terminaux sans fil ; et
régler le droit de connexion au réseau d'après les informations de réglage, **caractérisé en ce que** :
le droit de connexion au réseau est un droit servant à permettre une pluralité d'états connectés au réseau dans lesquels des contenus de service fournis via le réseau après que la connexion au réseau a été établie sont mutuellement différents,
les informations de réglage sont des informations servant à régler le droit de connexion au réseau qui amènent l'appareil terminal sans fil à entrer dans au moins un état connecté au réseau parmi la pluralité d'états connectés au réseau, et
la pluralité d'états connectés au réseau comporte un premier état et un second état, le premier état étant un état connecté limité servant à modifier le droit de connexion au réseau et le second état étant un état connecté sur la base duquel la fourniture d'un service souhaité peut être reçue via un réseau après que la connexion au réseau a été établie.
